(19) Europäisches Patentamt
European Patent Office
Office européen des brevets

(11) EP 2 259 675 B1

# (12) EUROPÄISCHE PATENTSCHRIFT

(45) Veröffentlichungstag und Bekanntmachung des Hinweises auf die Patenterteilung:
**07.10.2015 Patentblatt 2015/41**

(21) Anmeldenummer: **09713218.7**

(22) Anmeldetag: **20.02.2009**

(51) Int Cl.:
***A01N 35/04*** (2006.01) ***A01N 43/653*** (2006.01)

(86) Internationale Anmeldenummer:
**PCT/EP2009/052087**

(87) Internationale Veröffentlichungsnummer:
**WO 2009/103813 (27.08.2009 Gazette 2009/35)**

(54) **FUNGIZIDE ZUSAMMENSETZUNGEN MIT 3'-BROM-2,3,4,6'-TETRAMETHOXY-2'-6-DIMETHYLBENZOPHENON**

FUNGICIDAL COMPOSITIONS COMPRISING 3'-BROMINE-2,3,4,6'-TETRAMETHOXY-2'-6-DIMETHYLBENZOPHENONE

COMPOSITIONS FONGICIDES CONTENANT DU 3'-BROMO-2,3,4,6'-TETRAMETHOXY-2'-6-DIMETHYLBENZOPHENONE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**RS**

(30) Priorität: **22.02.2008 EP 08151802**

(43) Veröffentlichungstag der Anmeldung:
**15.12.2010 Patentblatt 2010/50**

(73) Patentinhaber: **BASF SE**
**67056 Ludwigshafen (DE)**

(72) Erfinder:
- **GEWEHR, Markus**
  **56288 Kastellaun (DE)**
- **BRUNS, Jens**
  **67435 Neustadt (DE)**
- **SCHERER, Maria**
  **76829 Landau (DE)**
- **HADEN, Egon**
  **67061 Ludwigshafen (DE)**

(56) Entgegenhaltungen:
**EP-A2- 1 023 837**
**WO-A1-02/056686**
**WO-A1-02/067679**
**WO-A1-2004/000019**
**WO-A2-2007/134777**
**US-A- 6 001 883**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft fungizide Zusammensetzungen, umfassend als aktive Komponenten Wirkstoff 1)3'-Brom-2,3,4,6'-tetramethoxy-2',6-dimethylbenzophenon;
und Wirkstoff
2c) 1-{2-[2-Chlor-4-(4-chlorphenoxy)phenyl]-4-methyl-[1,3]dioxolan-2-ylmethyl}-1H-[1,2,4]triazol;
in einer synergistisch wirksamen Menge.

Außerdem betrifft die Erfindung ein Verfahren zur Bekämpfung von Schadpilzen mit Zusammensetzungen umfassend Wirkstoff 1) und Wirkstoff 2c) und die Verwendung von Wirkstoff 1) mit Wirkstoff 2c) zur Herstellung derartiger Zusammensetzungen, sowie Mittel, die diese Mischungen enthalten. Weiterhin betrifft die Erfindung die Verwendung der fungiziden Mischungen zur Bekämpfung von pflanzenpathogenen Pilzen und sie enthaltende Mittel bzw. Zusammensetzungen.

Der voranstehende Wirkstoff 1) 3'-Brom-2,3,4,6'-tetramethoxy-2',6-dimethylbenzophenon ist das Benzophenon Metrafenon, dessen Herstellung und dessen Wirkung gegen Schadpilze aus der Literatur bekannt sind (EP 0 897 904 A1):

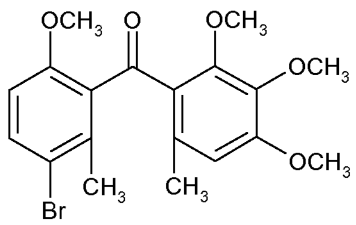

Metrafenon

Der voranstehende Wirkstoff 2c) 1-{2-[2-Chlor-4-(4-chlorphenoxy)phenyl]-4-methyl-[1,3]dioxolan-2-ylmethyl}-1H-[1,2,4]triazol ist das Azol Difenoconazol, dessen Herstellung und Wirkung gegen Schadpilze ebenfalls bekannt sind (GB-A 2 098 607).

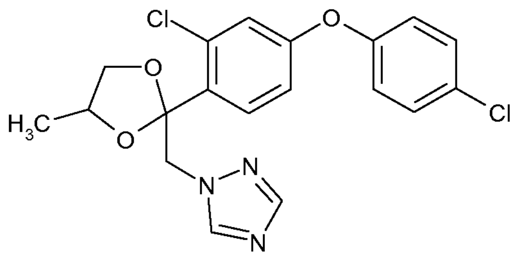

Difenoconazol

In EP 1 023 834 A1 werden Mischungen von Benzophenonen, wie Metrafenon, mit einem weiteren Wirkstoff offenbart und in WO02/067679 werden synergistische Mischungen von Metrafenon mit Wirkstoffen aus der Gruppe der Azole genannt;
Difenoconazol ist jedoch nicht umfasst.

Im Hinblick auf eine Senkung der Aufwandmengen und eine Verbreiterung des Wirkungsspektrums der bekannten Verbindungen lagen der vorliegenden Erfindung fungizide Zusammensetzungen als Aufgabe zugrunde, die bei verringerter Gesamtmenge an ausgebrachten Wirkstoffen eine verbesserte Wirkung gegen Schadpilze, insbesondere für bestimmte Indikationen, zeigen.

Demgemäss wurden die eingangs definierten Zusammensetzungen (erfindungsgemäße Zusammensetzungen) gefunden. Es wurde außerdem gefunden, dass sich bei gleichzeitiger gemeinsamer oder getrennter Anwendung von Metrafenon und dem Wirkstoff 2c) oder bei Anwendung von Metrafenon und dem Wirkstoff 2c) nacheinander

Schadpilze besser bekämpfen lassen als mit den Einzelverbindungen (synergistische Mischungen). Im Hinblick auf eine Senkung der Aufwandmengen sind diese Mischungen von Interesse, da viele bei verringerter Gesamtmenge an ausgebrachten Wirkstoffen eine verbesserte Wirkung gegen Schadpilze, insbesondere für bestimmte Indikationen, zeigen. Durch gleichzeitige gemeinsame oder getrennte Anwendung von Metrafenon mit dem Wirkstoff 2c) wird die fungizide Wirksamkeit in überadditivem Maße erhöht.

Die Zusammensetzungen umfassend Metrafenon und dem Wirkstoff 2c), bzw. die gleichzeitige gemeinsame oder gleichzeitige getrennte Anwendung von Metrafenon und dem Wirkstoff 2c) zeichnen sich außerdem aus durch eine stärkende und erstragssteigernde Wirkung auf Pflanzen, und eine hervorragende Wirksamkeit gegen ein breites Spektrum von pflanzenpathogenen Pilzen, insbesondere aus der Klasse der Ascomyceten, Deuteromyceten, Basidiomyceten und Peronosporomyceten (syn. Oomyceten). Sie sind zum Teil systemisch wirksam und können im Pflanzenschutz als Blatt-, Beiz- und Bodenfungizide eingesetzt werden. Darüber hinaus sind sie geeignet für die Bekämpfung von Pilzen, die unter anderem das Holz oder die Wurzeln von Pflanzen befallen.

Eine besondere hohe Wirksamkeit haben sie bei der Bekämpfung einer Vielzahl von Pilzen an verschiedenen Kulturpflanzen wie Bananen, Baumwolle, Gemüsepflanzen (z.B. Gurken, Bohnen und Kürbisse), Gerste, Gras, Hafer, Kaffee, Kartoffeln, Mais, Obstpflanzen, Reis, Roggen, Soja, Tomaten, Wein, Weizen, Zierpflanzen, Zuckerrohr und einer Vielzahl von Samen, z.B. in Soja und Reis.

Besonders bevorzugt ist die Verwendung an Wein-, Obst- oder Gemüsekulturen. Besonders bevorzugt ist die Verwendung an Kürbisgewächsen, Gurken, Bohnen, Kernobst, Erdbeeren oder Kirschen.

Außerdem werden die Zusammensetzungen umfassend Metrafenon und einen Wirkstoff 2) zur Bekämpfung einer Vielzahl von pilzlichen Pathogenen in Ackerbaukulturen, z. B. Kartoffeln, Zuckerrüben, Tabak, Weizen, Roggen, Gerste, Hafer, Reis, Mais, Baumwolle, Soja, Raps, Hülsenfrüchte, Sonnenblumen, Kaffee oder Zuckerrohr; Obst-, Wein- und Zierpflanzen und Gemüsepflanzen, z. B. Gurken, Tomaten, Bohnen und Kürbisse sowie an dem Vermehrungsmaterial, z. B. Samen, und dem Erntegut dieser Pflanzen verwendet.

Der Begriff pflanzliche Vermehrungsmaterialien umfasst alle generativen Teile der Pflanze, z. B. Samen, und vegetative Pflanzenteile, wie Stecklinge und Knollen (z. B. Kartoffeln), die zur Vermehrung einer Pflanze genutzt werden können. Dazu gehören Samen, Wurzeln, Früchte, Knollen, Zwiebeln, Rhizome, Triebe und andere Pflanzenteile, einschließlich Keimlingen und Jungpflanzen, die nach der Keimung oder dem Auflaufen umgepflanzt werden. Die Jungpflanzen können durch eine teilweise oder vollständige Behandlung, z. B. durch Eintauchen oder Gießen, vor Schadpilzen geschützt werden.

Die Behandlung von pflanzlichen Vermehrungsmaterialien mit Verbindungen I bzw. den erfindungsgemäßen Zusammensetzungen wird zur Bekämpfung einer Vielzahl von pilzlichen Pathogenen in Getreidekulturen, z. B. Weizen, Roggen, Gerste oder Hafer; Reis, Mais, Baumwolle und Soja eingesetzt.

Der Begriff Kulturpflanzen schließt auch solche Pflanzen ein, die durch Züchtung, Mutagenese oder gentechnische Methoden verändert wurden einschließlich der auf dem Markt oder in Entwicklung befindlichen biotechnologischen Agrarprodukte (siehe z.B. http://www.bio.org/speeches/pubs/er/agri_products.asp). Gentechnisch veränderte Pflanzen sind Pflanzen, deren genetisches Material in einer Weise verändert worden ist, wie sie unter natürlichen Bedingungen durch Kreuzen, Mutationen oder natürliche Rekombination (d.h. Neuzusammenstellung der Erbinformation) nicht vorkommt. Dabei werden in der Regel ein oder mehrere Gene in das Erbgut der Pflanze integriert, um die Eigenschaften der Pflanze zu verbessern. Derartige gentechnische Veränderungen umfassen auch posttranslationale Modifikationen von Proteinen, Oligo- oder Polypeptiden z.B. mittels Glykolsylierung oder Bindung von Polymeren wie z.B. prenylierter, acetylierter oder farnelysierter Reste oder PEG-Reste.

Beispielhaft seien Pflanzen genannt, die durch züchterische und gentechnische Maßnahmen eine Toleranz gegen bestimmter Herbizidklassen, wie Hydroxyphenylpyruvat-Dioxygenase (HPPD)-Inhibitoren, Acetolactat-Synthase (ALS)-Inhibitoren wie z. B. Sulfonylharnstoffe (EP-A 257 993, US 5,013,659) oder Imidazolinone (z. B. US 6,222,100, WO 01/82685, WO 00/26390, WO 97/41218, WO 98/02526, WO 98/02527, WO 04/106529, WO 05/20673, WO 03/14357, WO 03/13225, WO 03/14356, WO 04/16073), Enolpyruvylshikimat-3-Phosphat-Synthase (EPSPS)-Inhibitoren wie z. B. Glyphosat (siehe z. B. WO 92/00377), Glutaminsynthetase (GS)-Inhibitoren wie z. B. Glufosinat (siehe z. B. EP-A 242 236, EP-A 242 246) oder OxynilHerbizide (siehe z. B. US 5,559,024) erworben haben. Durch Züchtung und Mutagenese wurde z. B. Clearfield®-Raps (BASF SE, Deutschland) erzeugt, der eine Toleranz gegen Imidazolinone, z. B. Imazamox, hat. Mit Hilfe gentechnischer Methoden wurden Kulturpflanzen, wie Soja, Baumwolle, Mais, Rüben und Raps, erzeugt, die resistent gegen Glyphosat oder Glufosinat sind, erzeugt, welche unter den Handelsnamen RoudupReady® (Glyphosat-resistent, Monsanto, U.S.A.) und Liberty Link® (Glufosinatresistent, Bayer CropScience, Deutschland) erhältlich sind.

Weiterhin sind auch Pflanzen umfasst, die mit Hilfe gentechnischer Maßnahmen ein oder mehrere Toxine, z. B. solche aus dem Bakterienstamm Bacillus, produzieren. Toxine, die durch solche gentechnisch veränderten Pflanzen hergestellt werden, umfassen z. B. insektizide Proteine von Bacillus spp., insbesondere von B. thuringiensis, wie die Endotoxine Cry1Ab, Cry1Ac, Cry1F, Cry1 Fa2, Cry2Ab, Cry3A, Cry3Bb1, Cry9c, Cry34Ab1 oder Cry35Ab1; oder vegetative insektizide Proteine (VIPs), z. B. VIP1, VIP2, VIP3, oder VIP3A; insektizide Proteine von Nematoden-kolonisierenden Bakterien, z. B. Photorhabdus spp. oder Xenorhabdus spp.; Toxine aus tierischen Organismen, z. B. Wepsen,-, Spinnen- oder Skorpionstoxine; pilzliche Toxine, z. B. aus Streptomyceten; pflanzliche Lektine, z. B. aus Erbse oder Gerste; Agglutinine; Proteinase-Inhibitoren, z. B. Trypsin-Inhibitoren, Serinprotease-Inhibitoren, Patatin, Cystatin oder Papain-Inhibitoren; Ribosomen-inaktivierende Proteine (RIPs), z. B. Ricin, Mais-RIP, Abrin, Luffin, Saporin oder Bryodin; Steroid-metabolisierende Enzyme, z. B. 3-Hydroxysteroid-Oxidase, Ecdysteroid-IDP-Glycosyl-Transferase, Cholesterinoxidase, Ecdyson-Inhibitoren oder HMG-CoA-Reduktase; Ionenkanalblocker, z. B. Inhibitoren von Natrium- oder Calziumkanälen; Juvenilhormon-Esterase; Rezeptoren für das diuretischen Hormon (Helicokininrezeptoren); Stilbensynthase, Bibenzylsynthase, Chitinasen und Glucanasen. Diese Toxine können in den Pflanzen auch als Prätoxine, Hybridproteine, verkürzte oder anderweitig modfizierte Proteine produziert werden. Hybridproteine zeichnen sich durch

eine neue Kombination von verschiedenen Proteindomänen aus (siehe z. B. WO 2002/015701). Weitere Besipiele für derartige Toxine oder gentechnisch veränderte Pflanzen, die diese Toxine produzieren, sind in EP-A 374 753, WO 93/07278, WO 95/34656, EP-A 427 529, EP-A 451 878, WO 03/18810 und WO 03/52073 offenbart. Die Methoden zur Herstellung dieser gentechnisch veränderten Pflanzen sind dem Fachmann bekannt und z. B. in den oben erwähnten Publikationen dargelegt. Zahlreiche der zuvor genannten Toxine verleihen den Pflanzen, die diese produzieren, eine Toleranz gegen Schädlinge aus allen taxonomischen Arthropodenklassen, insbesondere gegen Käfer (Coeleropta), Zweiflügler (Diptera) und Schmetterlinge (Lepidoptera) und gegen Nematoden (Nematoda). Gentechnisch veränderte Pflanzen, die ein oder mehrere Gene, die für insektizide Toxine kodieren, produzieren sind z. B. in den oben erwähnten Publikationen beschrieben und zum Teil kommerziell erhältlich, wie z. B. YieldGard® (Maissorten, die das Toxin Cry1Ab produzieren), YieldGard® Plus (Maissorten, die die Toxine Cry1Ab und Cry3Bb1 produzieren), Starlink® (Maissorten, die das Toxin Cry9c produzieren), Herculex® RW (Maissorten, die die Toxine Cry34Ab1, Cry35Ab1 und das Enzym Phosphinothricin-N-Acetyl-transferase [PAT] produzieren); NuCOTN® 33B (Baumwollsorten, die das Toxin Cry1Ac produzieren), Bollgard® I (Baumwollsorten, die das Toxin Cry1Ac produzieren), Bollgard® II (Baumwollsorten, die die Toxine Cry1Ac und Cry2Ab2 produzieren); VIP-COT® (Baumwollsorten, die ein VIP-Toxin produzieren); NewLeaf® (Kartoffelsorten, die das Toxin Cry3A produzieren); Bt-Xtra®, NatureGard®, KnockOut®, BiteGard®, Protecta®, Bt11 (z. B. Agrisure® CB) und Bt176 von Syngenta Seeds SAS, Frankreich, (Maissorten, die das Toxin Cry1Ab und das PAT-Enyzm produzieren), MIR604 von Syngenta Seeds SAS, Frankreich (Maissorten, die ein modifizierte Version des Toxins Cry3A produzieren, siehe hierzu WO 03/018810), MON 863 von Monsanto Europe S.A., Belgien (Maissorten, die das Toxin Cry3Bb1 produzieren), IPC 531 von Monsanto Europe S.A., Belgien (Baumwollsorten, die eine modifizierte Version des Toxins Cry1Ac produzieren) und 1507 von Pioneer Overseas Corporation, Belgien (Maissorten, die das Toxin Cry1F und das PAT-Enyzm produzieren).

Weiterhin sind auch Pflanzen umfasst, die mit Hilfe gentechnische Maßnahmen ein oder mehrere Proteine produzieren, die eine erhöhte Resistenz oder Widerstandfähigkeit gegen bakterielle, virale oder pilzliche Pathogene bewirken, wie z. B. sogenannte Pathogenesis-related-Proteine (PR-Proteine, siehe EP-A 0 392 225), Resistenzproteine (z. B. Kartoffelsorten, die zwei Resistenzgene gegen Phytophthora infestans aus der mexikanischen Wildkartoffel Solanum bulbocastanum produzieren) oder T4-Lysozym (z. B. Kartoffelsorten, die durch die Produktion diese Proteins resistent gegen Bakterien wie Erwinia amylvora ist).

Weiterhin sind auch Pflanzen umfasst, deren Produktivität mit Hilfe gentechnischer Methoden verbessert wurde, indem z. B. die Ertragsfähigkeit (z. B. Biomasse, Kornertrag, Stärke-, Öl- oder Proteingehalt), die Toleranz gegenüber Trockenheit, Salz oder anderen begrenzenden Umweltfaktoren oder die Widerstandsfähigkeit gegenüber Schädlingen und pilzlichen, bakteriellen und viralen Pathogenen gesteigert wird.

Weiterhin sind auch Pflanzen umfasst, deren Inhaltsstoffe insbesondere zur Verbesserung der menschlichen oder tierischen Ernährung mit Hilfe gentechnischer Methoden verändert wurden, indem z. B. Ölpflanzen gesundheitsfördernde langkettige Omega-3-Fettsäuren oder einfach ungesättigte Omega-9-Fettsäuren (z. B. Nexera®-Raps, DOW Agro Sciences, Kanada) produzieren.

Weiterhin sind auch Pflanzen umfasst, die zur verbesserten Produktion von Rohstoffen mit Hilfe gentechnischer Methoden verändert wurden, indem z. B. der Amylopektin-Gehalt von Kartoffeln (Amflora®-Kartoffel, BASF SE, Deutschland) erhöht wurde. Speziell eignen die Zusammensetzungen umfassend Metrafenon und einen Wirkstoff 2c) sich zur Bekämpfung folgender Pflanzenkrankheiten:

Alternaria Arten an Gemüse, Raps, Zuckerrüben, Obst, Reis, Sojabohnen sowie an Kartoffeln (z.B. A. solani oder A. alternata) und Tomaten (z.B. A. solani oder A. alternata) und Alternaria ssp. (Ährenschwärze) an Weizen,
Aphanomyces Arten an Zuckerrüben und Gemüse,
Ascochyta Arten an Getreide and Gemüse z.B. Ascochyta tritici (Blattdürre) an Weizen, Bipolaris- und Drechslera Arten an Mais (z.B. D. maydis), Getreide, Reis und Rasen, Blumeria graminis (Echter Mehltau) an Getreide (z.B. Weizen oder Gerste),
Botrytis cinerea (Grauschimmel) an Erdbeeren, Gemüse, Blumen, Weinreben und Weizen (Ährenschimmel),
Bremia lactucae an Salat,
Cercospora Arten an Mais, Reis, Zuckerrüben und z.B. Cercospora sojina (Blattflecken) oder Cercospora kikuchii (Blattflecken) an Sojabohnen,
Cladosporium herbarum (Ährenschwärze) an Weizen,
Cochliobolus Arten an Mais, Getreide (z.B. Cochliobolus sativus) und Reis (z.B. Cochliobolus miyabeanus),
Colletotricum Arten an Baumwolle und z.B. Colletotrichum truncatum (Antracnose) an Sojabohnen
Corynespora cassiicola (Blattflecken) an Sojabohnen,
Dematophora necatrix (Wurzel-/Stengelfäule) an Sojabohnen,
Diaporthe phaseolorum (Stengelkrankheit) an Sojabohnen,
Drechslera Arten, Pyrenophora Arten an Mais, Getreide, Reis und Rasen, an Gerste (z.B. D. teres) und an Weizen (z.B. D. tritici-repentis),

Esca an Weinrebe, verursacht durch Phaeoacremonium chlamydosporium, Ph. Aleophilum, und Formitipora punctata (syn. Phellinus punctatus),
Elsinoe ampelina an Weinrebe,
Epicoccum spp. (Ährenschwärze) an Weizen,
Exserohilum Arten an Mais,
Erysiphe cichoracearum und Sphaerotheca fuliginea an Gurkengewächsen,
Fusarium und Verticillium Arten an verschiedenen Pflanzen: z.B. F. graminearum oder F. culmorum (Wurzelfäule) an Getreide (z.B. Weizen oder Gerste) oder z.B. F. oxysporum an Tomaten und Fusarium solani (Stengelkrankheit) an Sojabohnen Gaeumanomyces graminis (Wurzelschwärze) an Getreide (z.B. Weizen oder Gerste),
Gibberella Arten an Getreide und Reis (z.B. Gibberella fujikuroi),
Glomerella cingulata an Weinrebe und anderen Pflanzen,
Grainstaining complex an Reis,
Guignardia budwelli an Weinrebe,
Helminthosporium Arten an Mais und Reis,
Isariopsis clavispora an Weinrebe,
Macrophomina phaseolina (Wurzel-/Stengelfäule) an Sojabohnen,
Michrodochium nivale (Schneeschimmel) an Getreide (z.B. Weizen oder Gerste), Microsphaera diffusa (Echter Mehltau) an Sojabohnen,
Mycosphaerella Arten an Getreide, Bananen und Erdnüssen, wie z.B. M. graminicola an Weizen oder M. fijiensis an Bananen,
Peronospora Arten an Kohl (z.B. P. brassicae), Zwiebelgewächsen (z.B. P. destructor) und z.B. Peronospora manshurica (Falscher Mehltau) an Sojabohnen Phakopsara pachyrhizi (Soja-Rost) und Phakopsara meibomiae (Soja-Rost) an Sojabohnen,
Phialophora gregata (Stengelkrankheit) an Sojabohnen
Phomopsis Arten an Sonnenblumen, Weinrebe (z.B. P. viticola) und Sojabohnen (z.B. Phomopsis phaseoli),
Phytophthora Arten an verschiedenen Pflanzen z.B. P. capsici an Paprika, Phytopthora megasperma (Blatt-/Stengelfäule) an Sojabohnen, Phytophthora infestans an Kartoffeln und Tomaten,
Plasmopara viticola an Weinreben,
Podosphaera leucotricha an Apfel,
Pseudocercosporella herpotrichoides (Halmbruch) an Getreide (Weizen oder Gerste), Pseudoperonospora an verschiedenen Pflanzen z.B. P. cubensis an Gurke oder
P. humili an Hopfen,
Pseudopezicula tracheiphilai an Weinrebe,
Puccinia Arten an verschiedenen Pflanzen z.B. P. triticina, P. striformins, P. hordei oder P. graminis an Getreide (z.B. Weizen oder Gerste) oder an Spargel (z.B. P. asparagi),
Pyricularia oryzae, Corticium sasakii, Sarocladium oryzae, S. attenuatum,
Pyrenophora tritici-repentis (Blattdürre) an Weizen oder Pyrenophora teres (Netzflecken) an Gerste,
Entyloma oryzae an Reis,
Pyricularia grisea an Rasen und Getreide,
Pythium spp. an Rasen, Reis, Mais, Weizen, Baumwolle, Raps, Sonnenblumen, Zuckerrüben, Gemüse und anderen Pflanzen (z.B. P. ultiumum oder P. aphanidermatum), Ramularia collo-cygni (Ramularia/Sonnenbrand-Komplex/Physiological leaf spots) an Gerste,
Rhizoctonia Arten an Baumwolle, Reis, Kartoffeln, Rasen, Mais, Raps, Kartoffeln, Zuckerrüben, Gemüse und an verschiedenen weiteren Pflanzen z.B. Rhizoctonia solani (Wurzel-/Stengelfäule) an Sojabohnen oder Rhizoctonia cerealis (Spitzer Augenfleck) an Weizen oder Gerste,
Rhynchosporium secalis an Gerste (Blattflecken), Roggen und Triticale,
Sclerotinia Arten an Raps, Sonnenblumen und z.B. Sclerotinia sclerotiorum (Stengelkrankheit) oder Sclerotinia rolfsii (Stengelkrankheit) an Sojabohnen,
Septoria glycines (Blattflecken) an Sojabohnen,
Septoria tritici (Blattseptoria) und Stagonospora nodorum an Weizen,
Erysiphe (syn. Uncinula) necator an Weinrebe,
Setospaeria Arten an Mais und Rasen,
Sphacelotheca reilinia an Mais,
Stagonospora nodorum (Ährenseptoria) an Weizen,
Thievaliopsis Arten an Sojabohnen und Baumwolle,
Tilletia Arten an Getreide,
Typhula incarnata (Schneefäule) an Weizen oder Gerste,
Ustilago Arten an Getreide, Mais (z.B. U. maydis) und Zuckerrohr,

Venturia Arten (Schorf) an Äpfeln (z.B. V. inaequalis) und Birnen.

Im besonderen eignen sich die Zusammensetzungen umfassend Metrafenon und einen Wirkstoff 2c) zur Bekämpfung folgender Pflanzenkrankheiten:

Albugo spp. (Weißer Rost) an Zierpflanzen, Gemüsekulturen (z.B: A. candida) und Sonnenblumen (z. B. A. tragopogonis); Alternaria spp. (Schwärze, Schwarzfleckigkeit) an Gemüse, Raps (z. B. A. brassicola oder A. brassicae), Zuckerrüben (z. B. A. tenuis), Obst, Reis, Sojabohnen sowie an Kartoffeln (z. B. A. solani oder A. alternata) und Tomaten (z. B. A. solani oder A. alternata) und Alternaria spp. (Ährenschwärze) an Weizen; Aphanomyces spp. an Zuckerrüben und Gemüse; Ascochyta spp. an Getreide und Gemüse, z. B. A. tritici (Blattdürre) an Weizen und A. hordei an Gerste; Bipolaris und Drechslera spp. (Teleomorph: Cochliobolus spp.) z. B. Blattfleckenkrankheiten (D. maydis und B. zeicola) an Mais, z. B. Braunfleckigkeit (B. sorokiniana) an Getreide und z.B. B. oryzae an Reis und an Rasen; Blumeria (früher: Erysiphe) graminis (Echter Mehltau) an Getreide (z. B. Weizen oder Gerste); Botryosphaeria spp. ('Black Dead Arm Disease') an Weinreben (z. B. B. obtusa); Botrytis cinerea (Teleomorph: Botryotinia fuckeliana: Grauschimmel, Graufäule) an Beeren- und Kernobst (u.a. Erdbeeren), Gemüse (u.a. Salat, Möhren, Sellerie und Kohl), Raps, Blumen, Weinreben, Forstkulturen und Weizen (Ährenschimmel); Bremia lactucae (Falscher Mehltau) an Salat; Ceratocystis (Syn. Ophiostoma) spp. (Bläuepilz) an Laub- und Nadelgehölzen, z. B. C. ulmi (Ulmensterben, Holländische Ulmenkrankheit) an Ulmen; Cercospora spp. (Cercospora-Blattflecken) an Mais (z. B. C. zeae-maydis), Reis, Zuckerrüben (z. B. C. beticola), Zuckerrohr, Gemüse, Kaffee, Sojabohnen (z. B. C. sojina oder C. kikuchii) und Reis; Cladosporium spp. an Tomate (z. B. C. fulvum: Samtflecken-Krankheit) und Getreide, z. B. C. herbarum (Ährenschwärze) an Weizen; Claviceps purpurea (Mutterkorn) an Getreide; Cochliobolus (Anamorph: Helminthosporium oder Bipolaris) spp. (Blattflecken) an Mais (z. B. C. carbonum), Getreide (z. B. C. sativus, Anamorph: B. sorokiniana: Braunfleckigkeit) und Reis (z. B. C. miyabeanus, Anamorph: H. oryzae); Colletotrichum (Teleomorph: Glomerella) spp. (Brennflecken, Anthraknose) an Baumwolle (z. B. C. gossypii), Mais (z. B. C. graminicola: Stängelfäule und Brennflecken), Beerenobst, Kartoffeln (z. B. C. coccodes: Welke), Bohnen (z. B. C. lindemuthianum) und Sojabohnen (z. B. C. truncatum); Corticium spp., z. B. C. sasakii (Blattscheidenbrand) an Reis; Corynespora cassiicola (Blattflecken) an Sojabohnen und Zierpflanzen; Cycloconium spp., z. B. C. oleaginum an Olive; Cylindrocarpon spp. (z. B. Obstbaum-Krebs oder Rebensterben, Teleomorph: Nectria oder Neonectria spp.) an Obstgehölzen, Weinreben (z. B. C. liriodendri, Teleomorph: Neonectria liriodendri, ‚Black Foot Disease') und vielen Ziergehölzen; Dematophora (Teleomorph: Rosellinia) necatrix (Wurzel-/Stängelfäule) an Sojabohnen; Diaporthe spp. z. B. D. phaseolorum (Stängelkrankheit) an Sojabohnen; Drechslera (Syn. Helminthosporium, Teleomorph: Pyrenophora) spp. an Mais, Getreide, wie Gerste (z. B. D. teres, Netzflecken) und an Weizen (z. B. D. tritici-repentis: DTR-Blattdürre), Reis und Rasen; Esca-Krankheit (Rebstocksterben, Apoplexie) an Weinrebe, verursacht durch Formitiporia (Syn. Phellinus) punctata, F. mediterranea, Phaeomoniella chlamydospora (früher Phaeoacremonium chlamydosporum), Phaeoacremonium aleophilum und/oder Botryosphaeria obtusa; Elsinoe spp. an Kern-(E. pyri) und Beerenobst (E. veneta: Brennflecken) sowie Weinrebe (E. ampelina: Brennflecken); Entyloma oryzae (Blattbrand) an Reis; Epicoccum spp. (Ährenschwärze) an Weizen; Erysiphe spp. (Echter Mehltau) an Zuckerrübe (E. betae), Gemüse (z. B. E. pisi), wie Gurken- (z. B. E. cichoracearum) und Kohlgewächsen, wie Raps (z. B. E. cruciferarum).; Eutypa lata (Eutypa-Krebs oder -Absterben, Anamorph: Cytosporina lata, Syn. Libertella blepharis) an Obstgehölzen, Weinreben und vielen Ziergehölzen; Exserohilum (Syn. Helminthosporium) spp. an Mais (z. B. E. turcicum); Fusarium (Teleomorph: Gibberella) spp. (Welke, Wurzel- und Stängelfäule) an verschiedenen Pflanzen, wie z. B. F. graminearum oder F. culmorum (Wurzelfäule und Tauboder Weißährigkeit) an Getreide (z. B. Weizen oder Gerste), F. oxysporum an Tomaten, F. solani an Sojabohnen und F. verticillioides an Mais; Gaeumannomyces graminis (Schwarzbeinigkeit) an Getreide (z. B. Weizen oder Gerste) und Mais; Gibberella spp. an Getreide (z. B. G. zeae) und Reis (z. B. G. fujikuroi: Bakanae-Krankheit); Glomerella cingulata an Weinrebe, Kernobst und anderen Pflanzen und G. gossypii an Baumwolle; Grainstaining complex an Reis; Guignardia bidwellii (Schwarzfäule) an Weinrebe; Gymnosporangium spp. an Rosaceen und Wacholder, z. B. G. sabinae (Birnengitterrost) an Birnen; Helminthosporium spp. (Syn. Drechslera, Teleomorph: Cochliobolus) an Mais, Getreide und Reis; Hemileia spp., z. B. H. vastatrix (Kaffeeblattrost) an Kaffee; Isariopsis clavispora (Syn. Cladosporium vitis) an Weinrebe; Macrophomina phaseolina (Syn. phaseoli) (Wurzel-/Stängelfäule) an Sojabohnen und Baumwolle; Microdochium (Syn. Fusarium) nivale (Schneeschimmel) an Getreide (z. B. Weizen oder Gerste); Microsphaera diffusa (Echter Mehltau) an Sojabohnen; Monilinia spp., z. B. M. laxa, M. fructicola und M. fructigena (Blüten- und Spitzendürre) an Steinobst und anderen Rosaceen; Mycosphaerella spp. an Getreide, Bananen, Beerenobst und Erdnüssen, wie z. B. M. graminicola (Anamorph: Septoria tritici, Septoria-Blattdürre) an Weizen oder M. fijiensis (Schwarze Sigatoka-Krankheit) an Bananen; Peronospora spp. (Falscher Mehltau) an Kohl (z. B. P. brassicae), Raps (z. B. P. parasitica), Zwiebelgewächsen (z. B. P. destructor), Tabak (P. tabacina) und Sojabohnen (z. B. P. manshurica); Phakopsora pachyrhizi und P. meibomiae (Sojabohnenrost) an Sojabohnen; Phialophora spp. z. B. an Weinreben (z. B. P. tracheiphila und P. tetraspora) und Sojabohnen (z. B. P. gregata: Stängelkrankheit); Phoma lingam (Wurzel- und Stängelfäule) an Raps und Kohl und P. betae (Blattflecken) an Zuckerrüben; Phomopsis spp. an Sonnenblumen, Weinrebe (z. B. P. viticola: Schwarzflecken-Krankheit) und Sojabohnen (z. B. Stielfäule: P. phaseoli, Teleomorph: Diaporthe phaseolorum); Physoderma maydis (Braunfleckigkeit) an Mais; Phytophthora spp. (Welke, Wurzel-, Blatt-, Stängel- und Fruchtfäule) an verschiedenen Pflanzen, wie an Paprika und Gurkengewächsen (z. B. P. capsici), Sojabohnen (z. B. P. megasperma, Syn. P. sojae), Kartoffeln und Tomaten (z. B. P. infestans: Kraut- und Braunfäule) und Laubgehölzen (z. B. P. ramorum: Plötzliches Eichensterben); Plasmodiophora brassicae (Kohlhernie) an Kohl, Raps, Rettich und anderen Pflanzen; Plasmopara spp., z. B. P. viticola (Reben-Peronospora, Falscher Mehltau) an Weinreben und P. halstedii an Sonnenblumen; Podosphaera spp. (Echter Mehltau) an Rosaceen, Hopfen, Kern- und Beerenobst, z. B. P. leucotricha an Apfel; Polymyxa spp., z. B. an Getreide, wie Gerste und Weizen (P. graminis) und Zuckerrüben (P. betae) und die dadurch übertragenen Viruserkrankungen; Pseudocercosporella herpotrichoides (Halmbruch, Teleomorph: Tapesia yallundae) an Getreide, z. B. Weizen oder Gerste; Pseudoperonospora (Falscher Mehltau) an verschiedenen Pflanzen, z. B. P. cubensis an Gurkengewächsen oder P. humili an Hopfen; Pseudopezicula tracheiphila (Roter Brenner, Anamorph: Phialophora) an Weinrebe; Puccinia spp. (Rostkrankheit) an verschiedenen Pflanzen, z. B. P. triticina (Weizenbraunrost), P. striiformis (Gelbrost), P. hordei (Zwergrost), P. graminis (Schwarzrost) oder P. recondita (Roggenbraunrost) an Getreide, wie z. B. Weizen, Gerste oder Roggen, und an Spargel (z. B. P. asparagi); Pyrenophora (Anamorph: Drechslera) tritici-repentis (Blattdürre) an Weizen oder P. teres (Netzflecken) an Gerste; Pyricularia spp., z. B. P. oryzae (Teleomorph: Magnaporthe grisea, Reis-Blattbrand) an Reis und P. grisea an Rasen und Getreide; Pythium spp. (Umfallkrankheit) an Rasen, Reis, Mais, Weizen, Baumwolle, Raps, Sonnenblumen, Zuckerrüben, Gemüse und anderen Pflanzen (z. B. P. ultimum oder P. aphanidermatum); Ramularia spp., z. B. R. collo-cygni (Sprenkelkrankheit/Sonnenbrand-Komplex/Physiological leaf spots) an Gerste und R. beticola an Zuckerrüben; Rhizoctonia spp. an Baumwolle, Reis, Kartoffeln, Rasen, Mais, Raps, Kartoffeln, Zuckerrüben, Gemüse und an verschiedenen weiteren Pflanzen, z. B. R. solani (Wurzel-/Stängelfäule) an Sojabohnen, R. solani (Blattscheidenbrand) an Reis oder R. cerealis (Spitzer Augenfleck) an Weizen oder Gerste; Rhizopus stolonifer (Weichfäule) an Erdbeeren, Karotten, Kohl, Weinrebe und Tomate; Rhynchosporium secalis (Blattflecken) an Gerste, Roggen und Triticale; Sarocladium oryzae und S. attenuatum (Blattscheidenfäule) an Reis; Sclerotinia spp. (Stängel- oder Weißfäule) an Gemüse- und Ackerbaukulturen, wie Raps, Sonnenblumen (z. B. Sclerotinia sclerotiorum) und Sojabohnen (z. B. S. rolfsii); Septoria spp. an verschiedenen Pflanzen, z. B. S. glycines (Blattflecken) an Sojabohnen, S. tritici (Septoria-Blattdürre) an Weizen und S. (Syn. Stagonospora) nodorum (Blatt- und Spelzbräune) an Getreide; Uncinula (Syn. Erysiphe) necator (Echter Mehltau, Anamorph: Oidium tuckeri) an Weinrebe; Setospaeria spp. (Blattflecken) an Mais (z. B. S. turcicum, Syn. Helminthosporium turcicum) und Rasen; Sphacelotheca spp. (Staubbrand) an Mais, (z. B. S. reiliana: Kolbenbrand), Hirse und Zuckerrohr; Sphaerotheca fuliginea (Echter Mehltau) an Gurkengewächsen; Spongospora subterranea (Pulverschorf) an Kartoffeln und die dadurch übertragenen Viruserkrankungen; Stagonospora spp. an Getreide, z. B. S. nodorum (Blattund Spelzbräune, Teleomorph: Leptosphaeria [Syn. Phaeosphaeria] nodorum) an Weizen; Synchytrium endobioticum an Kartoffeln (Kartoffelkrebs); Taphrina spp., z. B. T. deformans (Kräuselkrankheit) an Pfirsich und T. pruni (Taschenkrankheit) an Pflaumen; Thielaviopsis spp. (Schwarze Wurzelfäule) an Tabak, Kernobst, Gemüsekulturen, Sojabohnen und Baumwolle, z. B. T. basicola (Syn. Chalara elegans); Tilletia spp. (Stein- oder Stinkbrand) an Getreide, wie z. B. T. tritici (Syn. T. caries, Weizensteinbrand) und T. controversa (Zwergsteinbrand) an Weizen; Typhula incarnata (Schneefäule) an Gerste oder Weizen; Urocystis spp., z. B. U. occulta (Stängelbrand) an Roggen; Uromyces spp. (Rost) an Gemüsepflanzen, wie Bohnen (z. B. U. appendiculatus, Syn. U. phaseoli) und Zuckerrüben (z. B. U. betae); Ustilago spp. (Flugbrand) an Getreide (z. B. U. nuda und U. avaenae), Mais (z. B. U. maydis: Maisbeulenbrand) und Zuckerrohr; Venturia spp. (Schorf) an Äpfeln (z. B. V. inaequalis) und Birnen; und Verticillium spp. (Laub- und Triebwelke) an verschiedenen Pflanzen, wie Obst- und Ziergehölzen, Weinreben, Beerenobst, Gemüse- und Ackerbaukulturen, wie z. B. V. dahliae an Erdbeeren, Raps, Kartoffeln und Tomaten.

Die Zusammensetzungen umfassend Metrafenon und einen Wirkstoff 2c) eignen sich außerdem zur Bekämpfung von Schadpilzen im Materialschutz und Bautenschutz (z.B. Holz, Papier, Dispersionen für den Anstrich, Fasern bzw. Gewebe) und im Vorratsschutz. Im Holzschutz und Bautenschutz finden insbesondere folgende Schadpilze Beachtung: Ascomyceten wie Ophiostoma spp., Ceratocystis spp., Aureobasidium pullulans, Sclerophoma spp., Chaetomium spp., Humicola spp., Petriella spp., Trichurus spp.; Basidiomyceten wie Coniophora spp., Coriolus spp., Gloeophyllum spp., Lentinus spp., Pleurotus spp., Poria spp., Serpula spp. und Tyromyces spp., Deuteromyceten wie Aspergillus spp., Cladosporium spp., Penicillium spp., Trichoderma spp., Alternaria spp., Paecilomyces spp. und Zygomyceten wie Mucor spp., darüber hinaus im Materialschutz folgende Hefepilze: Candida spp. und Saccharomyces cerevisae. Insbesondere wirksam sind die erfindungsgemäßen Zusammensetzungen zur Bekämpfung von Schadpilzen in Sonderkulturen wie z.B. Wein, Obst und Gemüse (siehe in der Liste oben).

Die Zusammensetzungen umfassend Metrafenon und einen Wirkstoff 2) eignen sich zur Steigerung der Pflanzengesundheit. Außerdem betrifft die Erfindung ein Verfahren zur Steigerung der Pflanzengesundheit, indem die Pflanzen, das pflanzliche Vermehrungsmaterial und/oder der Ort, an dem die Pflanzen wachsen oder wachsen sollen, mit einer wirksamen Menge der Verbindungen I bzw. der erfindungsgemäßen Zusammensetzungen behandelt werden.

Der Begriff "Pflanzengesundheit" umfasst solche Zustände einer Pflanze und/oder ihres Erntegutes, die durch verschiedene Indikatoren einzeln oder in Kombination miteinander bestimmt werden, wie bspw. Ertrag (z. B. erhöhte Biomasse und/oder erhöhter Gehalt verwertbarer Inhaltsstoffe), Pflanzenvitalität (z. B. erhöhtes Pflanzenwachstum und/oder grünere Blätter ("greening effect")), Qualität (z. B. erhöhter Gehalt oder Zusammensetzung bestimmter Inhaltsstoffe) und Toleranz gegenüber biotischem und/oder abiotischem Stress. Diese hier genannten Indikatoren für einen Pflanzengesundheitszustand können unabhängig voneinander auftreten oder sich gegenseitig bedingen.

Metrafenon und Wirkstoff 2c) können gleichzeitig gemeinsam, gleichzeitig getrennt oder nacheinander aufgebracht werden, wobei die Reihenfolge bei getrennter Applikation im Allgemeinen keine Auswirkung auf den Bekämpfungserfolg hat.

Die erfindungsgemäße Anwendung von Wirkstoff 1) und Wirkstoff 2c) muss also so erfolgen, dass Wirkstoff 1) und Wirkstoff 2c) gleichzeitig am Wirkort (d.h. die zu bekämpfenden planzenschädigenden Pilzen und deren Lebensraum wie befallene Pflanzen, Pflanzenvermehrungsmaterialien, insebesondere Saatgut, Erdböden, Materialien oder Räume sowie die vor Pilzbefall zu schützenden Pflanzen, Pflanzenvermehrungsmaterialien, insbesondere Saatgut, Erdböden, Materialien oder Räume) in einer für eine wirksame Kontrolle des Pilzwachstums ausreichenden Menge vorliegen. Dies kann dadurch erreicht werden, dass man Wirkstoff 1) und Wirkstoff 2c) gemeinsam in einer gemeinsamen Wirkstoffaufbereitung oder in mindestens zwei getrennten Wirkstoffaufbereitungen gleichzeitig ausbringt, oder indem man die Wirkstoffe nacheinander am Wirkort appliziert, wobei der zeitliche Abstand der einzelnen Wirkstoffapplikationen so gewählt wird, dass der zuerst ausgebrachte Wirkstoff zum Zeitpunkt der Applikation des/der weiteren Wirkstoffs/stoffe in ausreichender Menge am Wirkort vorliegt. Die zeitliche Reihenfolge des Ausbringens der Wirkstoffe ist von untergeordneter Bedeutung.

In den erfindungsgemäßen Zusammensetzungen liegt das Gewichtsverhältnis von Metrafenon zum Wirkstoff 2c) üblicherweise im Bereich von 1:100 bis 100:1, häufig im Bereich von 1:50 bis 50:1, vorzugsweise im Bereich von 1:20 bis 20:1, insbesondere im Bereich von 1:10 bis 10:1, insbesondere im Bereich von 1:3 zu 3:1.

Die Komponenten der erfindungsgemäßen Zusammensetzungen können einzeln oder bereits gemischt oder als Teile nach dem Baukastenprinzip (kit of parts) verpackt und weiterverwendet werden.

In einer Ausgestaltung der Erfindung können die Kits (Baukästen) ein oder mehrere, auch alle, Komponenten enthalten, die zur Herstellung einer erfindungsgemäßen agrochemischen Zusammensetzung verwendet werden können. Bespielsweise können diese Kits ein oder mehrere Fungizid-Komponente(n) und/oder eine Adjuvant-Komponente und/oder eine Wachstumsregulator-Komponente und/oder ein Herbizid enthalten. Ein oder mehrere Komponenten können miteinander kombiniert oder vorformuliert vorliegen. In den Ausgestaltungen, in denen mehr als zwei Komponenten in einem Kit bereitgestellt werden, können die Komponenten miteinander kombiniert und in einem einzelnen Behältnis wie einem Gefäß, Flasche, Dose, Beutel, Sack oder Kanister verpackt vorliegen. In anderen Ausgestaltungen, können zwei oder mehr Komponenten eines Kits getrennt verpackt sein, d. h. nicht vorformuliert bzw. gemischt. Kits können ein oder mehrere gesonderte Behältnisse wie Gefäße, Flaschen, Dosen, Beutel, Säcke oder Kanister enthalten, wobei jedes Behältnis eine gesonderte Komponente der agrochemischen Zusammensetzung enthält. Die Komponenten der erfindungsgemäßen Zusammensetzung können einzeln oder bereits gemischt oder als Teile nach dem Baukastenprinzip (kit of parts) verpackt und weiterverwendet werden. In beiden Formen kann eine Komponente getrennt oder zusammen mit den weiteren Komponenten oder als Bestandteil eines erfindungsgemäßen ‚kit of parts' zur Herstellung der erfindungsgemäßen Mischung verwendet werden.

Der Anwender verwendet die erfindungsgemäße Zusammensetzung üblicherweise für die Anwendung in einer Vordosiereinrichtung, im Rückenspritzer, im Spritztank oder im Sprühflugzeug. Dabei wird die agrochemische Zusammensetzung mit Wasser und/oder Puffer auf die gewünschte Anwendungskonzentration gebracht, wobei gegebenenfalls weitere Hilfsstoffe zugegeben werden, und so die anwendungsbereite Spritzbrühe bzw. die erfindungsgemäße agrochemische Zusammensetzung erhalten wird. Üblicherweise werden 50 bis 500 Liter der anwendungsbereiten Spritzbrühe pro Hektar landwirtschaftlicher Nutzfläche aufgebracht, bevorzugt 100 bis 400 Liter.

Nach einer Ausführungsform kann der Anwender einzelne Komponenten wie z. B. Teile eines Kits oder einer Zweier- oder Dreiermischung der erfindungsgemäßen Zusammensetzung selber im Spritztank mischen und gegebenenfalls weitere Hilfsstoffe zugeben (Tankmix).

In einer weiteren Ausführungsform kann der Anwender sowohl einzelne Komponenten der erfindungsgemäßen Zusammensetzung als auch teilweise vorgemischte Komponenten im Spritztank mischen und gegebenenfalls weitere Hilfsmittel zugeben (Tankmix).

In einer weiteren Ausführungsform kann der Anwender sowohl einzelne Komponenten der erfindungsgemäßen Zusammensetzung als auch teilweise vorgemischte Komponenten, gemeinsam (z. B. als Tankmix) oder nacheinander anwenden.

Unter bestimmten Umständen kann es vorteilhaft sein, den erfindungsgemäßen Zusammensetzungen und fungiziden Mitteln bzw. Wirkstoffen 1) und 2c) einen oder mehrere weitere Wirkstoffe beizumischen. Diese Zusammensetzungen sind eine besondere Ausführungsform der erfindungsgemäßen Zusammensetzungen.

Solche weiteren Wirkstoffe im voranstehenden Sinne sind bevorzugt ausgewählt aus der folgenden Liste:

A) Strobilurine:

Azoxystrobin, Dimoxystrobin, Enestroburin, Fluoxastrobin, Kresoxim-methyl, Metominostrobin, Orysastrobin,

Picoxystrobin, Pyraclostrobin, Pyribencarb, Trifloxystrobin, 2-(2-(6-(3-Chlor-2-methyl-phenoxy)-5-fluor-pyrimidin-4-yloxy)-phenyl)-2-methoxy-imino-N-methyl-acetamid, 2-(ortho-((2,5-Dimethylphenyl-oxymethylen)phenyl)-3-methoxy-acrylsäuremethylester, 3-Methoxy-2-(2-(N-(4-methoxy-phenyl)-cyclopro-panecarboximidoylsulfanylmethyl)-phenyl)-acrylic acid methyl ester, 2-(2-(3-(2,6-di-chlorphenyl)-1-methyl-allylideneaminooxymethyl)-phenyl)-2-methoxyimino-N-methyl-acetamide;

B) Carbonsäureamide:

- Carbonsäureanilide: Benalaxyl, Benalaxyl-M, Benodanil, Bixafen, Boscalid, Carboxin, Fenfuram, Fenhexamid, Flutolanil, Furametpyr, Isopyrazam, Isotianil, Kiralaxyl, Mepronil, Metalaxyl, Metalaxyl-M (Mefenoxam), Ofurace , Oxadixyl, Oxycarboxin, Penthiopyrad, Sedaxane" Tecloftalam, Thifluzamide, Tiadinil, 2-Amino-4-methyl-thiazole-5-carbonsäureanilid, 2-Chlor-N-(1,1,3-trimethyl-indan-4-yl)-nicotinamid, 3-Difluormethyl-1-methyl-1H-pyrazol-4-carbonsäure(2',4'-difluorbiphenyl-2-yl)-amid, 3-Difluormethyl-1-methyl-1 H-pyrazol-4-carbonsäure(2',4'-dichlorbiphenyl-2-yl)-amid, 3-Difluormethyl-1-methyl-1H-pyrazol-4-carbonsäure(2',5'-difluorbiphenyl-2-yl)-amide, 3-Difluormethyl-1-methyl-1H-pyrazol-4-carbonsäure(2',5'-dichlorbiphenyl-2-yl)-amide, 3-Difluormethyl-1-methyl-1H-pyrazol-4-carbonsäure(3',5'-difluorbiphenyl-2-yl)-amide, 3-Difluormethyl-1-methyl-1H-pyrazol-4-carbonsäure (3',5'-dichlorbiphenyl-2-yl)-amid, 3-Difluormethyl-1-methyl-1 H-pyrazol-4-carbonsäure (3'-fluorbiphenyl-2-yl)-amid, 3-Difluormethyl-1-methyl-1 H-pyrazol-4-carbonsäure (3'-chlorbiphenyl-2-yl)-amid, 3-Difluormethyl-1-methyl-1 H-pyrazol-4-carbonsäure (2'-fluorbiphenyl-2-yl)-amid, 3-Difluormethyl-1-methyl-1 H-pyrazol-4-carbonsäure (2'-chlorbiphenyl-2-yl)-amid, 3-Difluormethyl-1-methyl-1 H-pyrazol-4-carbonsäure (3',4',5'-trifluorbiphenyl-2-yl)-amid, 3-Difluormethyl-1-methyl-1H-pyrazol-4-carbonsäure (2',4',5'-trifluorbiphenyl-2-yl)-amid, 3-Difluormethyl-1-methyl-1 H-pyrazol-4-carbonsäure [2-(1,1,2,3,3,3-hexafluorpropoxy)-phenyl]amid , 3-Difluormethyl-1-methyl-1 H-pyrazol-4-carbonsäure-[2-(1,1,2,2-tetrafluorethoxy)-phenyl]amid, 3-Difluormethyl-1-methyl-1H-pyrazol-4-carbonsäure(4'-trifluormethylthiobiphenyl-2-yl)amid, N-(3',4'-dichlor-5-fluor-biphenyl-2-yl)-3-difluormethyl-1-methyl-1H-pyrazol-4-carbonsäureamid, N-(2-(1,3-dimethyl-butyl)-phenyl)-1,3,3-trimethyl-5-fluor-1H-pyrazol-4-carbonsäureamid, N-(2-(1,3-Dimethyl-butyl)-phenyl)-1,3-dimethyl-5-fluor-1H-pyrazol-4-carboxamid, N-(2-(1,3,3-Trimethyl-butyl)-phenyl)-1,3-dimethyl-5-fluor-1H-pyrazol-4-carboxamid, N-(4'-chlor-3',5'-difluor-biphenyl-2-yl)-3-difluormethyl-1-methyl-1 H-pyrazol-4-carbonsäureamid, N-(4'-chlor-3',5'-difluor-biphenyl-2-yl)-3-trifluormethyl-1-methyl-1H-pyrazol-4-carbonsäureamid, N-(3',4'-dichlor-5'-fluor-biphenyl-2-yl)-3-trifluormethyl1-methyl-1 H-pyrazol-4-carbonsäureamid, N-(3',5'-difluor-4'-methyl-biphenyl-2-yl)-3-difluormethyl-1-methyl-1 H-pyrazol-4-carbonsäureamid, N-(3',5'-difluor-4'-methyl-biphenyl-2-yl)-3-trifluormethyl-1-methyl-1 H-pyrazol-4-carbonsäureamid, N-(2-bicyclopropyl-2-yl-phenyl)-3-difluormethyl-1-methyl-1 H-pyrazol-4-carbonsäureamid, N-(cis-2-bicyclopropyl-2-yl-phenyl)-3-difluormethyl-1-methyl-1 H-pyrazol-4-carbonsäureamid, N-(trans-2-bicyclopropyl-2-yl-phenyl)-3-difluormethyl-1-methyl-1 H-pyrazol-4-carbonsäureamid;
- Carbonsäuremorpholide: Dimethomorph, Flumorph, Pyrimorph;
- Benzoesäureamide: Flumetover, Fluopicolide, Fluopyram, Zoxamid, N-(3-Ethyl-3,5,5-trimethyl-cyclohexyl)-3-formylamino-2-hydroxy-benzamid;
- Sonstige Carbonsäureamide: Carpropamid, Diclocymet, Mandipropamid, Oxytetracyclin, Silthiofam, N-(6-methoxy-pyridin-3-yl)cyclopropancarbonsäureamid;

C) Azole:

- Triazole: Azaconazol, Bitertanol, Cyproconazol, Diniconazol, Diniconazol-M, Epoxiconazol, Fenbuconazol, Fluquinconazol, Flusilazol, Flutriafol, Imibenconazol, Ipconazol, Metconazol, Myclobutanil, Oxpoconazol, Paclobutrazol, Penconazol, Propiconazol, Prothioconazol, Simeconazol, Tebuconazol, Tetraconazol, Triadimefon, Tria-dimenol, Triticonazol, Uniconazol, 1-(4-Chlor-phenyl)-2-([1,2,4]triazol-1-yl)-cycloheptanol;
- Imidazole: Cyazofamid, Imazalil, Imazalilsulfat, Pefurazoat, Prochloraz, Triflumizol;
- Benzimidazole: Benomyl, Carbendazim, Fuberidazole, Thiabendazol;
- Sonstige: Ethaboxam, Etridiazol, Hymexazol, 1-(4-Chlor-phenyl)-1-(propin-2-yloxy)-3-(4-(3,4-dimethoxy-phenyl)-isoxazol-5-yl)-propan-2-on, 2-(4-Chlor-phenyl)-N-[4-(3,4-dimethoxy-phenyl)-isoxazol-5-yl]-2-prop-2-inyloxy-acetamid;

D) Stickstoffhaltige Heterocyclylverbindungen

- Pyridine: Fluazinam, Pyrifenox, 3-[5-(4-Chlor-phenyl)-2,3-dimethyl-isoxazolidin-3-yl]-pyridin, 3-[5-(4-Methyl-phenyl)-2,3-dimethyl-isoxazolidin-3-yl]-pyridin, 2,3,5,6-Tetrachlor-4-methansulfonylpyridin, 3,4,5-Trichlor-pyridin-2,6-dicarbonitril, N-(1-(5-Brom-3-chlor-pyridin-2-yl)-ethyl)-2,4-dichlornicotinamid, N-((5-Brom-3-chlor-pyridin-2-yl)-methyl)-2,4-dichlornicotinamid;

- Pyrimidine: Bupirimat, Cyprodinil, Diflumetorim, Fenarimol, Ferimzone, Mepanipyrim, Nitrapyrin, Nuarimol, Pyrimethanil;
- Piperazine: Triforine;
- Pyrrole: Fludioxonil, Fenpiclonil;
- Morpholine: Aldimorph, Dodemorph, Dodemorphacetat, Fenpropimorph, Tridemorph;
- Piperidine: Fenpropidin;
- Dicarboximide: Fluorimid, Iprodione, Procymidone, Vinclozolin;
- nichtaromatische 5-Ring-Heterocyclen: Famoxadon, Fenamidon, Flutianil, Octhilinon, Probenazol, 5-Amino-2-isopropyl-3-oxo-4-ortho-tolyl-2,3-dihydropyrazol-1-thiocarbonsäureS-allylester;
- sonstige: Acibenzolar-S-methyl, Amisulbrom, Anilazin, Blasticidin-S, Captafol, Captan, Chinomethionat, Dazomet, Debacarb, Diclomezine, Difenzoquat, Difenzoquatmethylsulfat, Fenoxanil, Folpet, Oxolinsäure, Piperalin, Proquinazid, Pyroquilon, Quinoxyfen, Triazoxid, Tricyclazol, 2-Butoxy-6-jod-3-propyl-chromen-4-on, 5-Chlor-1-(4,6-dimethoxy-pyrimidin-2-yl)-2-methyl-1H-benzoimidazol, N-(4-(3-Methoxy-1-(5-methyl-[1,2,3]thiadiazol-4-yl)-naphthalen-2-yl)-thiazol-2-yl)-butyramid, 5-Chlor-7-(4-methyl-piperidin-1-yl)-6-(2,4,6-trifluor-phenyl)-[1,2,4]triazolo[1,5-a]pyrimidin, 6-(3,4-Dichlorphenyl)-5-methyl-[1,2,4]triazolo[1,5-a]pyrimidin-7-ylamin, 6-(4-tert-Butylphenyl)-5-methyl-[1,2,4]triazolo[1,5-a]pyrimidin-7-ylamin, 5-Methyl-6-(3,5,5-trimethyl-hexyl)-[1,2,4]triazolo[1,5-a]pyrimidin-7-ylamin, 5-Methyl-6-octyl-[1,2,4]triazolo[1,5-a]pyrimidin-7-ylamin, 6-Methyl-5-octyl-[1,2,4]triazolo[1,5-a]pyrimidin-7-yl-amin, 6-Ethyl-5-octyl-[1,2,4]triazolo[1,5-a]pyrimidin-7-ylamin, 5-Ethyl-6-octyl-[1,2,4]triazolo[1,5-a]pyrimidin-7-ylamin, 5-Ethyl-6-(3,5,5-trimethyl-hexyl)-[1,2,4]triazolo-[1,5-a]pyrimidin-7-ylamin, 6-Octyl-5-propyl-[1,2,4]triazolo[1,5-a]pyrimidin-7-ylamin, 5-Methoxymethyl-6-octyl-[1,2,4]triazolo[1,5-a]pyrimidin-7-ylamin, 6-Octyl-5-trifluormethyl-[1,2,4]triazolo[1,5-a]pyrimidin-7-ylamin und 5-Trifluormethyl-6-(3,5,5-trimethyl-hexyl)-[1,2,4]triazolo[1,5-a]pyrimidin-7-ylamin;

E) Carbamate und Dithiocarbamate

- Thio- und Dithiocarbamate: Ferbam, Mancozeb, Maneb, Metam, Methasulphocarb, Metiram, Propineb, Thiram, Zineb, Ziram;
- Carbamate: Diethofencarb, Benthiavalicarb, Iprovalicarb, Propamocarb, Propamocarb-hydrochlorid, Valiphenal, N-(1-(1-(4-Cyanophenyl)ethansulfonyl)-but-2-yl)carbaminsäure-(4-fluorphenyl)ester;

F) Sonstige Fungizide

- Guanidine: Dodine, Dodine freie Base, Guazatin, Guazatinacetat, Iminoctadin, Iminoctadin-triacetat, Iminoctadin-tris(albesilat);
- Antibiotika: Kasugamycin, Kasugamycinhydrochlorid-Hydrat, Polyoxine, Streptomycin, Validamycin A;
- Nitrophenylderivate: Binapacryl, Dicloran, Dinobuton, Dinocap, Nitrothal-isopropyl, Tecnazen;
- Organometallverbindungen: Fentin-Salze wie beispielsweise Fentin-acetat, Fentinchlorid, Fentin-hydroxid;
- Schwefelhaltige Heterocyclylverbindungen: Dithianon, Isoprothiolane;
- Organophosphorverbindungen: Edifenphos, Fosetyl, Fosetyl-Aluminium, Iprobenfos, Phosphorige Säure und ihre Salze, Pyrazophos, Tolclofos-methyl;
- Organochlorverbindungen: Chlorthalonil, Dichlofluanid, Dichlorphen, Flusulfamide, Hexachlorbenzol, Pencycuron, Pentachlorphenol und dessen Salze, Phthalid, Quintozen, Thiophanat-Methyl, Tolylfluanid, N-(4-Chlor-2-nitro-phenyl)-N-ethyl-4-methyl-benzolsulfonamid;
- Anorganische Wirkstoffe: Phosphorige Säure und ihre Salze, Bordeaux Brühe, Kupfersalze wie beispielsweise Kupferacetat, Kupferhydroxid, Kupferoxychlorid, basisches Kupfersulfat, Schwefel;
- Sonstige: Biphenyl, Bronopol, Cyflufenamid, Cymoxanil, Diphenylamin, Mildiomycin, Oxin-Kupfer, Prohexadion-Calcium, Spiroxamin, Tolylfluanid, N-(Cyclo-propylmethoxyimino-(6-difluormethoxy-2,3-difluor-phenyl)-methyl)-2-phenyl acetamid, N'-(4-(4-Chlor-3-trifluormethyl-phenoxy)-2,5-dimethyl-phenyl)-N-ethyl-N-methylformamidin, N'-(4-(4-Fluor-3-trifluormethyl-phenoxy)-2,5-dimethyl-phenyl)-N-ethyl-N-methylformamidin, N'-(2-Methyl-5-trifluormethyl-4-(3-trimethylsilanyl-propoxy)-phenyl)-N-ethyl-N-methylformamidin, N'-(5-Difluormethyl-2-methyl-4-(3-trimethylsilanyl-propoxy)-phenyl)-N-ethyl-N-methylformamidin, 2-{1-[2-(5-Methyl-3-trifluormethyl-pyrazol-1-yl)-acetyl]-piperidin-4-yl}-thiazol-4-carboxylsäure-methyl-(1,2,3,4-tetrahydronaphthalen-1-yl)-amid, 2-{1-[2-(5-Methyl-3-trifluormethyl-pyrazol-1-yl)-acetyl]-piperidin-4-yl}-thiazol-4-carboxylsäure-methyl-(R)-1,2,3,4-tetrahydronaphthalen-1-yl-amid, Essigsäure-6-tert.-butyl-8-fluor-2,3-dimethyl-quinolin-4-yl-ester, Methoxy-essigsäure-6-tert.-butyl-8-fluor-2,3-dimethyl-quinolin-4-yl-ester;

G) Wachstumsregler

Abscisinsäure, Amidochlor, Ancymidol, 6-Benzylaminopurin, Brassinolid, Butralin, Chlormequat (Chlormequatchlorid), Cholinchlorid, Cyclanilid, Daminozid, Dikegulac, Dimethipin, 2,6-Dimethylpuridin, Ethephon, Flumetralin, Flurprimidol, Fluthiacet, Forchlorfenuron, Gibberellinsäure, Inabenfid, Indol-3-essigsäure, Maleinsäurehydrazid, Mefluidid, Mepiquat (Mepiquatchlorid), Metconazol, Naphthalenessigsäure, N-6-Benzyladenin, Paclobutrazol, Prohexadion (Prohexadion-Calcium), Prohydrojasmon, Thidiazuron, Triapenthenol, Tributylphosphorotrithioat, 2,3,5-tri-Jodbenzoesäure, Trinexapac-ethyl und Uniconazol;
H) Herbizide

- Acetamide: Acetochlor, Alachlor, Butachlor, Dimethachlor, Dimethenamid, Dimethenamid-P, Flufenacet, Mefenacet, Metolachlor, Metazachlor, Napropamid, Naproanilid, Pethoxamid, Pretilachlor, Propachlor, Thenylchlor;
- Aminosäureanaloga: Bilanafos, Glyphosat, Glufosinat, Sulfosat;
- Aryloxyphenoxypropionate: Clodinafop, Cyhalofop-butyl, Fenoxaprop, Fluazifop, Haloxyfop, Metamifop, Propaquizafop, Quizalofop, Quizalofop-P-tefuryl;
- Bipyridyle: Diquat, Paraquat;
- Carbamate und Thiocarbamate: Asulam, Butylate, Carbetamide, Desmedipham, Dimepiperat, Eptam (EPTC), Esprocarb, Molinate, Orbencarb, Phenmedipham, Prosulfocarb, Pyributicarb, Thiobencarb, Triallate;
- Cyclohexanedione: Butroxydim, Clethodim, Cycloxydim, Profoxydim, Sethoxydim, Tepraloxydim, Tralkoxydim;
- Dinitroaniline: Benfluralin, Ethalfluralin, Oryzalin, Pendimethalin, Prodiamine, Trifluralin;
- Diphenylether: Acifluorfen, Aclonifen, Bifenox, Diclofop, Ethoxyfen, Fomesafen, Lactofen, Oxyfluorfen;
- Hydroxybenzonitrile: Bromoxynil, Dichlobenil, Ioxynil;
- Imidazolinone: Imazamethabenz, Imazamox, Imazapic, Imazapyr, Imazaquin, Imazethapyr;
- Phenoxyessigsäuren: Clomeprop, 2,4-Dichlorphenoxyessigsäure (2,4-D), 2,4-DB, Dichlorprop, MCPA, MCPA-thioethyl, MCPB, Mecoprop;
- Pyrazine: Chloridazon, Flufenpyr-ethyl, Fluthiacet, Norflurazon, Pyridat;
- Pyridine: Aminopyralid, Clopyralid, Diflufenican, Dithiopyr, Fluridone, Fluroxypyr, Picloram, Picolinafen, Thiazopyr;
- Sulfonylharnstoffe: Amidosulfuron, Azimsulfuron, Bensulfuron, Chlorimuron-Ethyl, Chlorsulfuron, Cinosulfuron, Cyclosulfamuron, Ethoxysulfuron, Flazasulfuron, Flucetosulfuron, Flupyrsulfuron, Foramsulfuron, Halosulfuron, Imazosulfuron, Iodosulfuron, Mesosulfuron, Metsulfuron-methyl, Nicosulfuron, Oxasulfuron, Primisulfuron, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron, 1-((2-Chlor-6-propyl-imidazo[1,2-b]pyridazin-3-yl)sulfonyl)-3-(4,6-dimethoxy-pyrimidin-2-yl)harnstoff;
- Triazine: Ametryn, Atrazin, Cyanazin, Dimethametryn, Ethiozin, Hexazinon, Metamitron, Metribuzin, Prometryn, Simazin, Terbuthylazin, Terbutryn, Triaziflam;
- Harnstoffe: Chlorotoluron, Daimuron, Diuron, Fluometuron, Isoproturon, Linuron, Methabenzthiazuron,Tebuthiuron;
- andere Hemmstoffe der Acetolactatsynthase: Bispyribac-Natrium, Cloransulam-Methyl, Diclosulam, Florasulam, Flucarbazone, Flumetsulam, Metosulam, Orthosulfamuron, Penoxsulam, Propoxycarbazone, Pyribambenz-Propyl, Pyribenzoxim, Pyriftalid, Pyriminobac-methyl, Pyrimisulfan, Pyrithiobac, Pyroxasulfon, Pyroxsulam;
- Sonstige: Amicarbazon, Aminotriazol, Anilofos, Beflubutamid, Benazolin, Bencarbazon, Benfluresat, Benzofenap, Bentazon, Benzobicyclon, Bromacil, Bromobutid, Butafenacil, Butamifos, Cafenstrole, Carfentrazone, Cinidon-Ethlyl, Chlorethoxyfos, Chlorpyrifos, Chlorthal, Cinmethylin, Clomazone, Cumyluron, Cyprosulfamid, Dicamba, Difenzoquat, Diflufenzopyr, Diofenolan, Drechslera monoceras, Endothal, Ethofumesat, Etobenzanid, Fentrazamide, Flumiclorac-Pentyl, Flumioxazin, Flupoxam, Fluorochloridon, Flurtamon, Indanofan, Isoxaben, Isoxaflutol, Lenacil, Propanil, Propyzamid, Quinclorac, Quinmerac, Mesotrion, Methylarsensäure, Naptalam, Oxadiargyl, Oxadiazon, Oxaziclomefon, Pentoxazon, Phenoxycarb, Pinoxaden, Pymetrozine, Pyraclonil, Pyraflufen-Ethyl, Pyrasulfotol, Pyrazoxyfen, Pyrazolynat, Quinoclamin, Saflufenacil, Sulcotrion, Sulfentrazon, Tebupirimfos, Terbacil, Tefluthrin, Tefuryltrion, Tembotrion, Terbufos, Thiencarbazon, Topramezon, 4-Hydroxy-3-[2-(2-methoxy-ethoxymethyl)-6-trifluormethyl-pyridin-3-carbonyl]-bicyclo[3.2.1]oct-3-en-2-on, (3-[2-Chlor-4-fluor-5-(3-methyl-2,6-dioxo-4-trifluormethyl-3,6-dihydro-2H-pyrimidin-1-yl)-phenoxy]-pyridin-2-yloxy)-essigsäureethylester, 6-Amino-5-chlor-2-cyclopropyl-pyrimidin-4-carboxylsäuremethylester, 6-Chlor-3-(2-cyclopropyl-6-methyl-phenoxy)-pyridazin-4-ol, 4-Amino-3-chlor-6-(4-chlor-phenyl)-5-fluor-pyridin-2-carboxylsäure, 4-Amino-3-chlor-6-(4-chlor-2-fluor-3-methoxy-phenyl)-pyridin-2-carboxylsäuremethyl-ester und 4-Amino-3-chlor-6-(4-chloro-3-dimethylamino-2-fluor-phenyl)-pyridin-2-carboxylsäuremethylester.

Die vorstehend genannten Wirkstoffe, ihre Herstellung und ihre Wirkung gegen Schadpilze sind bekannt (vgl.:

http://www.hclrss.demon.co.uk/index.html; http://www.alanwood.net/pesticides/); sie sind kommerziell erhältlich. Die nach IUPAC benannten Verbindungen, ihre Herstellung und ihre fungizide Wirkung sind ebenfalls bekannt (vgl. EP-A 141 317, EP-A 226 917; EP-A 1 028 125; EP-A 1 035 122; EP-A 1 201 648; WO 98/46608; WO 99/24413; WO 03/14103; WO 03/53145; WO 03/66609; WO 04/49804; WO 05/87772; WO 05/87773; WO 06/087325); Can. J. Plant Sci. 48(6), 587-94, 1968; EP-A 152 031; EP-A 243 970; EP-A 256 503; EP-A 428 941; EP-A 532 022; EP-A 1 122 244, JP 2002316902; DE 19650197; DE 10021412; DE 102005009458; US 3,296,272; US 3,325,503; WO 99/14187; WO 99/24413; W 99/27783; WO 00/29404; WO 00/46148; WO 00/65913; WO 01/54501; WO 01/56358; WO 02/22583; WO 02/40431; WO 03/10149; WO 03/11853; WO 03/16286; WO 03/61388; WO 03/74491; WO 05/120234; WO 05/123689; WO 05/123690; WO 05/63721; WO 06/15866; WO 06/87343; WO 07/82098; WO 07/90624).

Die Herstellung der erfindungsgemäßen Zusammensetzungen der Mischungen mehrer Wirkstoffe erfolgt in bekannter Weise in Form von Zusammensetzungen enthaltend neben den Wirkstoffen ein Lösungsmittel oder festen Trägerstoff, z. B. in der Weise wie für die erfindungsgemäßen Zusammensetzungen umfassend Metrafenon und einen Wirkstoff 2c) oben angegeben. Bezüglich der üblichen Inhaltsstoffe solcher Zusammensetzungen wird auf die Ausführungen zu den Zusammensetzungen oben verwiesen.

Die vorliegende Erfindung betrifft daher auch fungizide Zusammensetzungen, die Wirkstoff 1) und Wirkstoff 2c) und wenigstens einen weiteren Wirkstoff, z. B. einen oder mehrere, z.B. 1 oder 2 Wirkstoffe der vorgenannten A bis H und gegebenenfalls einen oder mehrere landwirtschaftlich geeignete Träger enthalten.

Bevorzugte ternäre Zusammensetzungen der Erfindung sind die folgenden, welche entsprechend bevorzugt in erfindungsgemäßen fungiziden Mitteln enthalten sind:

T14 Metrafenon, Difenoconazol und Azoxystrobin.
T15 Metrafenon, Difenoconazol und Boscalid.
T16 Metrafenon, Difenoconazol und Cyflufenamid.
T17 Metrafenon, Difenoconazol und Cyprodinil.
T18 Metrafenon, Difenoconazol und Dimethomorph.
T19 Metrafenon, Difenoconazol und Dithianon.
T20 Metrafenon, Difenoconazol und Iprodione.
T21 Metrafenon, Difenoconazol und Kresoxim-methyl.
T22 Metrafenon, Difenoconazol und Proquinazid.
T23 Metrafenon, Difenoconazol und Pyraclostrobin.
T24 Metrafenon, Difenoconazol und Pyrimethanil.
T25 Metrafenon, Difenoconazol und Quinoxyfen.
T26 Metrafenon, Difenoconazol und Trifloxystrobin.

Wobei die Bestandteile der ternären Zusammensetzungen jeweils in synergistischen Mengen vorliegen.

In den ternären Mischungen, liegt das Gewichtsverhältnis von Metrafenon zum dritten Wirkstoff vorzugsweise im Bereich von 1:50 bis 50:1, insbesondere im Bereich von 1:10 bis 10:1. Das Gewichtsverhältnis vom Wirkstoff 2c) zum dritten Wirkstoff liegt vorzugsweise im Bereich von 1:50 bis 50:1, insbesondere im Bereich von 1:10 bis 10:1.

Das Gewichtsverhältnis von Metrafenon zum Wirkstoff 2c) ist vorzugsweise wie oben angegeben.

Die Wirkstoffe können auch in Form ihrer landwirtschaftlich verträglichen Salze verwendet werden. Üblicherweise kommen dafür Alkali- oder Erdalkalisalze, wie Natrium-, Kalium- oder Calziumsalze in Frage.

Die Aufwandmengen der erfindungsgemäßen Zusammensetzungen liegen je nach Art der Verbindung und des gewünschten Effekts bei 5 g/ha bis 2000 g/ha, vorzugsweise 50 bis 900 g/ha, insbesondere 50 bis 750 g/ha.

Die Aufwandmengen für Metrafenon liegen entsprechend in der Regel bei 1 bis 1000 g/ha, vorzugsweise 10 bis 900 g/ha, insbesondere 20 bis 750 g/ha.

Die Aufwandmengen für den Wirkstoff 2c) liegen entsprechend in der Regel bei 1 bis 2000 g/ha, vorzugsweise 10 bis 900 g/ha, insbesondere 40 bis 500 g/ha.

Bei der Behandlung von pflanzlichen Vermehrungsmaterialien, z. B. Saatgutbehandlung, z.B. durch Bestäuben, Beschichten oder Tränken von Saatgut, werden im allgemeinen Aufwandmengen an erfindungsgemäßer Zusammensetzung von 0,1 bis 1000 g/100 kg Vermehrungsmaterial bzw. Saatgut, bevorzugt von 1 bis 1000 g/100 kg Saatgut, besonders bevorzugt 1 bis 750 g/100 kg, insbesondere 5 bis 500 g/100 kg und insbesondere 5 bis 100 g/100 kg verwendet.

Bei der Anwendung im Material- bzw. Vorratsschutz richtet sich die Aufwandmenge an Wirkstoff bzw. erfindungsgemäßer Zusammensetzung nach der Art des Einsatzgebietes und des gewünschten Effekts. Übliche Aufwandmengen sind im Materialschutz beispielsweise 0,001 g bis 2 kg, vorzugsweise 0,005 g bis 1 kg Wirkstoff pro Kubikmeter behandelten Materials.

Das Verfahren zur Bekämpfung von Schadpilzen erfolgt durch die getrennte oder gemeinsame Applikation von

Metrafenon und des Wirkstoff 2c) oder der Zusammensetzungen aus Metrafenon und Wirkstoff 2c) durch Besprühen oder Bestäuben der Samen, der Pflanzen oder der Böden vor oder nach der Aussaat der Pflanzen oder vor oder nach dem Auflaufen der Pflanzen.

Metrafenon bzw. der Wirkstoff 2c) bzw. Mischungen davon werden als solche oder in Form einer Zusammensetzung angewendet, indem man die Schadpilze, deren Lebensraum oder die vor Pilzbefall zu schützenden Pflanzen, pflanzlichen Vermehrungsmaterialien, z. B. Saatgüter, den Erdboden, Flächen, Materialien oder Räume mit einer fungizid wirksamen Menge der Wirkstoffe behandelt. Die Anwendung kann sowohl vor als auch nach der Infektion der Pflanzen, pflanzlichen Vermehrungsmaterialien, z. B. Saatgüter, des Erdboden, der Flächen, Materialien oder Räume durch die Pilze erfolgen.

Pflanzliche Vermehrungsmaterialien können vorbeugend zusammen mit oder bereits vor der Aussaat bzw. zusammen mit oder bereits vor dem Umpflanzen mit den erfindungsgemäßen Zusammensetzungen behandelt werden.

Außerdem betrifft die Erfindung agrochemische Zusammensetzungen, enthaltend ein Lösungsmittel oder festen Trägerstoff und Metrafenon und einen Wirkstoff 2c) zur Bekämpfung von Schadpilzen.

Eine agrochemische Zusammensetzung enthält eine fungizid wirksame Menge der Wirkstoffe. Der Ausdruck "wirksame Menge" bedeutet eine Menge der agrochemischen Zusammensetzung bzw. der Wirkstoffe, die zur Bekämpfung von Schadpilzen an Kulturpflanzen oder im Material- und Bautenschutz ausreichend ist und nicht zu einem beträchtlichen Schaden an den behandelten Kulturpflanzen führt. Eine derartige Menge kann innerhalb eines breiten Bereichs variieren und wird von zahlreichen Faktoren, wie z. B. dem zu bekämpfenden Schadpilz, der jeweiligen behandelten Kulturpflanze oder Materialien, den klimatischen Bedingungen und Verbindungen, beeinflusst.

Die erfindungsgemäßen Zusammensetzungen, bzw. Metrafenon und Wirkstoff 2c) können in die üblichen Formulierungen (agrochemische Zusammensetzungen) überführt werden, z.B. Lösungen, Emulsionen, Suspensionen, Stäube, Pulver, Pasten und Granulate. Die Anwendungsform bzw. der Zusammensetzungstyp richtet sich nach dem jeweiligen Verwendungszweck; sie soll in jedem Fall eine feine und gleichmäßige Verteilung der erfindungsgemäßen Zusammensetzung gewährleisten.

Der Begriff "Mittel" wird in diesem Zusammenhang gleichbedeutend mit dem Begriff "Zusammensetzung", insbesondere "agrochemische Zusammensetzung", und "Formulierung" verwendet.

Die Erfindung betrifft daher auch ein fungizides Mittel, enthaltend einen flüssigen oder festen Trägerstoff und eine erfindungsgemäße Zusammensetzung.

Beispiele für Zusammensetzungstypen sind Suspensionen (SC, OD, FS), Pasten, Pastillen, benetzbare Pulver oder Stäube (WP, SP, SS, WS, DP, DS) oder Granulate (GR, FG, GG, MG), die entweder in Wasser löslich (soluble) oder dispergierbar (wettable) sein können sowie Gele für die Behandlung pflanzlicher Vermehrungsmaterialien wie Saatgut (GF).

Im Allgemeinen werden die Zusammensetzungstypen (z. B. SC, OD, FS, WG, SG, WP, SP, SS, WS, GF) verdünnt eingesetzt. Zusammensetzungstypen wie DP, DS, GR, FG, GG und MG werden in der Regel unverdünnt eingesetzt.

Die Formulierungen (agrochemischen Zusammensetzungen) werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln (s. z. B. US 3,060,084, EP-A 707 445 (für flüssige Konzentrate), Browning, "Agglomeration", Chemical Engineering, Dec. 4, 1967, 147-48, Perry’s Chemical Engineer’s Handbook, 4. Aufl., McGraw-Hill, New York, 1963, 8-57 und ff., WO 91/13546, US 4,172,714, US 4,144,050, US 3,920,442, US 5,180,587, US 5,232,701, US 5,208,030, GB 2,095,558, US 3,299,566, Klingman: Weed Control as a Science (John Wiley & Sons, New York, 1961), Hance et al.: Weed Control Handbook (8th Ed., Blackwell Scientific Publications, Oxford, 1989) und Mollet, H. und Grubemann, A.: Formulation technology (Wiley VCH Verlag, Weinheim, 2001).

Die agrochemischen Zusammensetzungen können weiterhin auch für Pflanzenschutzmittel übliche Hilfsmittel enthalten, wobei sich die Wahl der Hilfsmittel nach der konkreten Anwendungsform bzw. dem Wirkstoff richtet.

Beispiele für geeignete Hilfsmittel sind Lösungsmittel, feste Trägerstoffe, oberflächenaktive Stoffe (wie weitere Solubilisatoren, Schutzkolloide, Netzmittel und Haftmittel), organische und anorganische Verdicker, Bakterizide, Frostschutzmittel, Entschäumer, ggf. Farbstoffe und Kleber (z. B. für Saatgutbehandlung).

Als Lösungsmittel / Hilfsstoffe kommen dafür im wesentlichen in Betracht:

- Wasser, aromatische Lösungsmittel (z.B. Solvesso Produkte, Xylol), Paraffine (z.B. Erdölfraktionen), Alkohole (z.B. Methanol, Butanol, Pentanol, Benzylalkohol), Ketone (z.B. Cyclohexanon, gamma-Butryolacton), Pyrrolidone (NMP, NOP), Acetate (Glykoldiacetat), Glykole, Dimethylfettsäureamide, Fettsäuren und Fettsäureester, organische Lösungsmittel wie Mineralölfraktionen von mittlerem bis hohem Siedepunkt wie Kerosin und Dieselöl, ferner Kohlenteeröle sowie Öle pflanzlichen oder tierischen Ursprungs, aliphatische, cyclische und aromatische Kohlenwasserstoffe, z.B. Paraffine, Tetrahydronaphthalin, alkylierte Naphthaline und deren Derivate, alkylierte Benzole und deren Derivate, Alkohole wie Methanol, Ethanol, Propanol, Butanol und Cyclohexanol, Gykole, Ketone wie Cyclohexanon, gamma-Butyrolacton, Dimethylfettsäureamide, Fettsäuren und Fettsäureester und stark polare Lösungsmittel, z.B. Amine wie N-Methylpyrrolidon. Grundsätzlich können auch Lösungsmittelgemische verwendet werden,

- Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Lignin-Sulfitablaugen und Methylcellulose, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulose-pulver.

Als oberflächenaktive Stoffe (Adjuvanzien, Netz-, Haft-, Dispergier- oder Emulgiermittel) kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkylarylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Ligninsulfitablaugen und Methylcellulose in Betracht, insbesondere Lignin-(Borresperse®-Typen, Borregaard, Norwegen), Phenol-, Naphthalin-(Morwet®-Typen, Akzo Nobel, USA) und Dibutylnaphthalinsulfonsäure (Nekal®-Typen, BASF, Deutschland), sowie von Fettsäuren, Alkyl- und Alkylarylsulfonaten, Alkyl-, Laurylether- und Fettalkoholsulfaten, sowie Salze sulfatierter Hexa-, Hepta- und Octadecanole sowie von Fettalkoholglykolethern, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen sowie Proteine, denaturierte Proteine, Polysaccharide (z.B. Methylcellulose), hydrophob modifizierte Stärken, Polyvinylalkohol (Mowiol®-Typen, Clariant, Schweiz), Polycarboxylate (Sokalan®-Typen, BASF, Deutschland), Polyalkoxylate, Polyvinylamin (Lupamin®-Typen, BASF, Deutschland), Polyethylenimin (Lupasol®-Typen, BASF, Deutschland), Polyvinylpyrrolidon und deren Copolymere

Beispiele für Verdicker (d. h. Verbindungen, die der Zusammensetzung ein modifiziertes Fließverhalten verleihen, d. h. hohe Viskosität im Ruhezustand und niedrige Viskosität im bewegten Zustand) sind Polysaccharide sowie organische und anorganische Schichtmineralien wie Xanthan Gum (Kelzan®, CP Kelco, USA), Rhodopol® 23 (Rhodia, Frankreich) oder Veegum® (R.T. Vanderbilt, USA) oder Attaclay® (Engelhard Corp., NJ, USA).
Bakterizide können zur Stabilisierung der Zusammensetzung zugesetzt werden. Beispiele für Bakterizide sind solche basierend auf Diclorophen und Benzylalkoholhemiformal (Proxel® der Fa. ICI oder Acticide® RS der Fa. Thor Chemie und Kathon® MK der Fa. Rohm & Haas) sowie Isothiazolinonderivaten wie Alkylisothiazolinonen und Benzisothiazolinonen (Acticide® MBS der Fa. Thor Chemie).
Beispiele für geeignete Frostschutzmittel sind Ethylenglycol, Propylenglycol, Harnstoff und Glycerin.
Beispiele für Entschäumer sind Silikonemulsionen (wie z. B. Silikon® SRE, Wacker, Deutschland oder Rhodorsil®, Rhodia, Frankreich), langkettige Alkohole, Fettsäuren, Salze von Fettsäuren, fluororganische Verbindungen und deren Gemische.
Beispiele für Farbmittel sind sowohl in Wasser wenig lösliche Pigmente als auch in Wasser lösliche Farbstoffe. Als Beispiele genannt seien die unter den Bezeichnungen Rhodamin B, C. I. Pigment Red 112 und C. I. Solvent Red 1, Pigment blue 15:4, Pigment blue 15:3, Pigment blue 15:2, Pigment blue 15:1, Pigment blue 80, Pigment yellow 1, Pigment yellow 13, Pigment red 48:2, Pigment red 48:1, Pigment red 57:1, Pigment red 53:1, Pigment orange 43, Pigment orange 34, Pigment orange 5, Pigment green 36, Pigment green 7, Pigment white 6, Pigment brown 25, Basic violet 10, Basic violet 49, Acid red 51, Acid red 52, Acid red 14, Acid blue 9, Acid yellow 23, Basic red 10, Basic red 108 bekannten Farbstoffe und Pigmente.
Beispiele für Kleber sind Polyvinylpyrrolidon, Polyvinylacetat, Polyvinylalkohol und Celluloseether (Tylose®, Shin-Etsu, Japan).

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten im Allgemeinen zwischen 0,01 und 95 Gew.-%, vorzugsweise zwischen 0,1 und 90 Gew.-% des Wirkstoffs. Die Wirkstoffe werden dabei in einer Reinheit von 90% bis 100%, vorzugsweise 95% bis 100% (nach NMR-Spektrum) eingesetzt.

Beispiele für Formulierungen (Zusammensetzungstypen) sind: 1. Produkte zur Verdünnung in Wasser

A Wasserlösliche Konzentrate (SL, LS)
10 Gew.-Teile der Wirkstoffe werden mit 90 Gew.-Teilen Wasser oder einem wasserlöslichen Lösungsmittel gelöst. Alternativ werden Netzmittel oder andere Hilfsmittel zugefügt. Bei der Verdünnung in Wasser löst sich der Wirkstoff. Man erhält auf diese Weise eine Formulierung mit 10 Gew.-% Wirkstoffgehalt.
B Dispergierbare Konzentrate (DC)
20 Gew.-Teile der Wirkstoffe werden in 70 Gew.-Teilen Cyclohexanon unter Zusatz von 10 Gew.-Teilen eines Dispergiermittels z.B. Polyvinylpyrrolidon gelöst. Bei Verdünnung in Wasser ergibt sich eine Dispersion. Der Wirkstoffgehalt beträgt 20 Gew.-%
C Emulgierbare Konzentrate (EC)

15 Gew.-Teile der Wirkstoffe werden in 75 Gew.-Teilen Xylol unter Zusatz von Ca-Dodecylbenzolsulfonat und Ricinusölethoxylat (jeweils 5 Gew.-Teile) gelöst. Bei der Verdünnung in Wasser ergibt sich eine Emulsion. Die Formulierung hat 15 Gew.-% Wirkstoffgehalt.
D Emulsionen (EW, EO, ES)
25 Gew.-Teile der Wirkstoffe werden in 35 Gew.-Teile Xylol unter Zusatz von Ca-Dodecylbenzolsulfonat und Ricinusölethoxylat (jeweils 5 Gew.-Teile) gelöst. Diese Mischung wird mittels einer Emulgiermaschine (z.B. Ultraturax) in 30 Gew.Teile Wasser gegeben und zu einer homogenen Emulsion gebracht. Bei der Verdünnung in Wasser ergibt sich eine Emulsion. Die Formulierung hat einen Wirkstoffgehalt von 25 Gew.-%.
E Suspensionen (SC, OD, FS)
20 Gew.-Teile der Wirkstoffe werden unter Zusatz von 10 Gew.-Teilen Dispergier- und Netzmitteln und 70 Gew.-Teilen Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs. Der Wirkstoffgehalt in der Formulierung beträgt 20 Gew.-% .
F Wasserdispergierbare und wasserlösliche Granulate (WG, SG) 50 Gew.-Teile der Wirkstoffe werden unter Zusatz von 50 Gew-Teilen Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs. Die Formulierung hat einen Wirkstoffgehalt von 50 Gew.-%.
G Wasserdispergierbare und wasserlösliche Pulver (WP, SP, SS, WS) 75 Gew.-Teile der Wirkstoffe werden unter Zusatz von 25 Gew.-Teilen Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs. Der Wirkstoffgehalt der Formulierung beträgt 75 Gew.-%.
H Gelformulierungen (GF)
In einer Kugelmühle werden 20 Gew.-Teile der Wirkstoffe, 10 Gew.-Teile Dispergiermittel, 1Gew.-Teil Quellmittel ("gelling agent") und 70 Gew.-Teile Wasser oder eines organischen Lösungsmittels zu einer feinen Suspension vermahlen. Bei der Verdünnung mit Wasser ergibt sich eine stabile Suspension mit 20 Gew.-% Wirkstoffgehalt.

2. Produkte für die Direktapplikation

I Stäube (DP, DS)

5 Gew.-Teile der Wirkstoffe werden fein gemahlen und mit 95 Gew.-Teilen feinteiligem Kaolin innig vermischt. Man erhält dadurch ein Stäubemittel mit 5 Gew.-% Wirkstoffgehalt.

J Granulate (GR, FG, GG, MG)

0,5 Gew-Teile der Wirkstoffe werden fein gemahlen und mit 99,5 Gewichtsteilen Trägerstoffe verbunden. Gängige Verfahren sind dabei die Extrusion, die Sprühtrocknung oder die Wirbelschicht. Man erhält dadurch ein Granulat für die Direktapplikation mit 0,5 Gew.-% Wirkstoffgehalt.

K ULV- Lösungen (UL)

10 Gew.-Teile der Wirkstoffe werden in 90 Gew.-Teilen eines organischen Lösungsmittel z.B. Xylol gelöst. Dadurch erhält man ein Produkt für die Direktapplikation mit 10 Gew.-% Wirkstoffgehalt.

Für die Behandlung pflanzlicher Vermehrungsmaterialien, insbesondere Saatgutbehandlung, werden üblicherweise wasserlösliche Konzentrate (LS), Suspensionen (FS), Stäube (DS), wasserdispergierbare und wasserlösliche Pulver (WS, SS), Emulsionen (ES), emulgierbare Konzentrate (EC) und Gelformulierungen (GF) verwendet. Diese Formulierungen können auf das Saatgut unverdünnt oder, bevorzugt, verdünnt angewendet werden. Hierbei kann die entsprechende Zusammensetzung 2 bis 10fach verdünnt werden, so dass in den für die Beize zu verwendeten Zusammensetzungen 0,01 to 60% Gew.-%, vorzugsweise 0,1 to 40% Gew.-% Wirkstoff vorhanden sind. Die Anwendung kann vor oder während, bevorzugt vor der Aussaat erfolgen.

Die Behandlung von pflanzlichem Vermehrungsmaterial, insbesondere die Behandlung von Saatgut, sind dem Fachmann bekannt, und erfolgen durch Bestäuben, Beschichten, Pelletieren, Eintauchen oder Tränken des pflanzlichen Vermehrungsmaterial, wobei die Behandlung bevorzugt durch Pelletieren, Beschichten und Bestäuben oder durch Furchenbehandlung erfolgt, so dass z. B. eine vorzeitige Keimung des Saatguts verhindert wird.

Für die Saatgutbehandlung werden bevorzugt Suspensionen verwendet. Üblicherweise enthalten solche Zusammensetzungen 1 bis 800 g/l Wirkstoff, 1 bis 200 g/l Tenside, 0 bis 200 g/l Frostschutzmittel, 0 bis 400 g/l Bindemittel, 0 bis 200 g/l Farbstoffe und Lösungsmittel, vorzugsweise Wasser.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen oder den diese enthaltenden Zusammensetzungen können Öle verschiedenen Typs, Netzmittel, Adjuvants, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:100 bis 100:1, bevorzugt 1:10 bis 10:1 zugemischt werden.

Als Adjuvanzien in diesem Sinne kommen insbesondere in Frage: organisch modifizierte Polysiloxane, z. B. Break Thru S 240®; Alkoholalkoxylate, z. B. Atplus® 245, Atplus® MBA 1303, Plurafac® LF 300 und Lutensol® ON 30; EO-PO-Blockpolymerisate, z. B. Pluronic® RPE 2035 und Genapol® B; Alkoholethoxylate, z. B. Lutensol® XP 80; und Natriumdioctylsulfosuccinat, z. B. Leophen® RA.

Anwendungsbeispiele

Die fungizide Wirkung der erfindungsgemäßen Zusammensetzungen und Mischungen läßt sich durch folgende Versuche zeigen:

Die Wirkstoffe wurden getrennt oder gemeinsam als eine Stammlösung aufbereitet mit 25 mg Wirkstoff, welcher mit einem Gemisch aus Aceton und/oder DMSO und dem Emulgator Uniperol® EL (Netzmittel mit Emulgier- und Dispergierwirkung auf der Basis ethoxylierter Alkylphenole) im Volumen-Verhältnis Lösungsmittel-Emulgator von 99 zu 1 ad 10 ml aufgefüllt wurde. Anschließend wurde ad 100 ml mit Wasser aufgefüllt. Diese Stammlösung wurde mit dem beschriebenen Lösungsmittel-Emulgator-Wasser Gemisch zu der unten angegeben Wirkstoffkonzentration verdünnt.

Die visuell ermittelten Werte für den Prozentanteil befallener Blattflächen wurden in Wirkungsgrade als % der unbehandelten Kontrolle umgerechnet:

Der Wirkungsgrad (W) wird nach der Formel von Abbot wie folgt berechnet:

$$W = (1 - \alpha/\beta) \cdot 100$$

$\alpha$ entspricht dem Pilzbefall der behandelten Pflanzen in % und
$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b
x der Wirkungsgrad, ausgedrückt in % der unbehandelten Kontrolle, beim Einsatz des Wirkstoffs A in der Konzentration a
y der Wirkungsgrad, ausgedrückt in % der unbehandelten Kontrolle, beim Einsatz des Wirkstoffs B in der Konzentration b

<u>Feldtestung</u>

Der Versuch wurde unter standardisierten Feldbedingungen durchgeführt. Es wurden Melonen auf dem Feld angezogen. Nach 36 Tagen wurde eine Applikation mit den genannten Produkten durchgeführt, welche zwei mal nach 7 und nach 14 Tagen wiederholt wurde. Es wurden keine weiteren Wirkstoffe zur Pathogenbekämpfung appliziert. Die Infektion mit dem Pathogen Sphaerotheca fuliginea erfolgte natürlich. Der Befall in % befallener Blattfläche wurde 35 Tage nach der ersten Applikation bonitiert. Die visuell ermittelten Werte für den Prozentanteil befallener Blattfläche wurde zunächst gemittelt, dann in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden wie oben beschrieben nach der Colby-Formel ermittelt und mit den beobachteten Wirkungsgraden verglichen.

Die Wirkstoffe wurden als handelsübliche Zusammensetzungen eingesetzt. Metrafenon wurde als 550 g/L Metrafenon SC (Suspensionskonzentrat) Formulierung (Vivando®, BASF SE, Deutschland) eingesetzt. Difenoconazol wurde als 250 g/L Difenoconazol EC (Emulsionskonzentrat) Formulierung (Bardos Neu®, BASF SE, Deutschland) eingesetzt.

**Sphaerotheca fuliginea**

| Behandlung | Dosis (g ai/ha) | Mischung | Beobachtete Wirkung 35 Tage nach der ersten Behandlung | Berechnete Wirkung nach Colby (%) | Synergismus (%) |
|---|---|---|---|---|---|
| Unbehandelte Kontrolle | 93% Befall | - | | | |
| Metrafenon | 100 | - | 70 | | |
| Metrafenon | 50 | - | 46 | | |
| Difenoconazol | 30 | - | 19 | | |
| Metrafenon + Difenoconazol | 50<br>30 | 1,6 : 1 | 65 | 56 | 9 |
| Metrafenon + Difenoconazol | 100<br>30 | 3,3 : 1 | 90 | 76 | 14 |

## Patentansprüche

1. Zusammensetzung, umfassend als aktive Komponenten:

   Wirkstoff 1) 3'-Brom-2,3,4,6'-tetramethoxy-2',6-dimethylbenzophenon;
   und Wirkstoff
   2c) 1-{2-[2-Chlor-4-(4-chlorphenoxy)phenyl]-4-methyl-[1,3]dioxolan-2-ylmethyl}-1H-[1,2,4]triazol;
   in einer synergistisch wirksamen Menge.

2. Zusammensetzung nach Anspruch 1, umfassend Wirkstoff 1)und Wirkstoff 2c) in einem Gewichtsverhältnis von 100:1 bis 1:100.

3. Agrochemische Zusammensetzung, enthaltend ein Lösungsmittel oder festen Trägerstoff und eine Zusammensetzung gemäß einem der Ansprüche 1 bis 2.

4. Verfahren zur Bekämpfung von pflanzenpathogenen Schadpilzen, **dadurch gekennzeichnet, dass** man die Pilze, deren Lebensraum oder die vor Pilzbefall zu schützenden Pflanzen, den Boden oder Saatgüter mit einer synergistisch wirksamen Menge des Wirkstoffes 1) und des Wirkstoffes 2c) gemäß Anspruch 1 behandelt.

5. Verfahren nach Anspruch 4, **dadurch gekennzeichnet, dass** man die Wirkstoffe 1) und 2c) gemäß Anspruch 1 gleichzeitig gemeinsam, gleichzeitig getrennt, oder nacheinander ausbringt.

6. Verfahren nach Anspruch 4 oder 5, **dadurch gekennzeichnet, dass** es in Soja-, Reis-, oder Getreidekulturen angewandt wird.

7. Verfahren nach Anspruch 4 oder 5, **dadurch gekennzeichnet, dass** es in Wein-, Obst- oder Gemüsekulturen angewandt wird.

8. Verfahren nach Anspruch 4 oder 5, **dadurch gekennzeichnet, dass** es an Kürbisgewächsen, Gurken, Bohnen, Kernobst, Erdbeeren oder Kirschen angewandt wird.

9. Verfahren nach einem der Ansprüche 4 bis 8, **dadurch gekennzeichnet, dass** man die Wirkstoffe 1) und 2c) gemäß Anspruch 1 oder die Zusammensetzung gemäß einem der Ansprüche 1 bis 2 in einer Menge von 5 g/ha bis 2000 g/ha aufwendet.

10. Verfahren nach einem der Ansprüche 4 bis 8, **dadurch gekennzeichnet, dass** man die Wirkstoffe 1 und 2c) gemäß Anspruch 1 oder die Zusammensetzung gemäß einem der Ansprüche 1 bis 2 in einer Menge von 1 bis 1000 g/100 kg Saatgut anwendet.

11. Saatgut, enthaltend eine Zusammensetzung gemäß einem der Ansprüche 1 bis 2 in einer Menge von 1 bis 1000 g/100 kg.

12. Verwendung der Wirkstoffe 1) und 2c) gemäß Anspruch 1 zur Herstellung eines Mittels gemäß Anspruch 3.

## Claims

1. A composition, comprising as active components:

   active compound 1) 3'-bromo-2,3,4,6'-tetramethoxy-2',6-dimethylbenzophenone;
   and active compound 2c) 1-{2-[2-chloro-4-(4-chlorophenoxy)phenyl]-4-methyl-[1,3]dioxolan-2-yl-methyl}-1H-[1,2,4]triazole;
   in a synergistically effective amount.

2. The composition according to claim 1, comprising active compound 1) and active compound 2c) in a weight ratio of from 100:1 to 1:100.

3. An agrochemical composition comprising a solvent or solid carrier and a composition according to any of claims 1 to 2.

4. A method of controlling phytopathogenic harmful fungi wherein the fungi, their habitat or the plants, the soil or seed to be protected against fungal attack are/is treated with a synergistically effective amount of the active compound 1) and the active compound 2c) according to claim 1.

5. The method according to claim 4 wherein the active compounds 1) and 2c) according to claim 1 are applied simultaneously jointly, simultaneously separately or in succession.

6. The method according to claim 4 or 5 wherein the method is applied in crops of soybeans, rice or cereals.

7. The method according to claim 4 or 5 wherein the method is applied in crops of grapevines, fruit or vegetables.

8. The method according to claim 4 or 5 wherein the method is applied on cucurbits, cucumbers, beans, pomaceous fruit, strawberries or cherries.

9. The method according to any of claims 4 to 8 wherein the active compounds 1) and 2c) according to claim 1 or the composition according to any one of claims 1 to 2 are/is applied in an amount from 5 g/ha to 2000 g/ha.

10. The method according to any of claims 4 to 8 wherein the active compounds 1) and 2c) according to claim 1 or the composition according to any of claims 1 to 2 are/is applied in an amount of from 1 to 1000 g/100 kg of seed.

11. Seed comprising a composition according to any of claims 1 to 2 in an amount of from 1 to 1000 g/100 kg.

12. The use of the active compounds 1) and 2c) according to claim 1 for preparing a fungicide according to claim 3.

**Revendications**

1. Composition, comprenant comme composants actifs :

   substance active 1) 3'-bromo-2,3,4,6'-tétraméthoxy-2',6-diméthylbenzophénone ;
   et substance active
   2c) 1-{2-[2-chloro-4-(4-chlorophénoxy)phényl]-4-méthyl-[1,3-dioxolan-2-ylméthyl}-1H-[1,2,4]-triazole ;
   en une quantité synergiquement efficace.

2. Composition selon la revendication 1, comprenant la substance active 1) et la substance active 2c) en un rapport pondéral de 100:1 à 1:100.

3. Composition agrochimique contenant un solvant ou une matière de support solide et une composition selon l'une quelconque des revendications 1 et 2.

4. Procédé pour la lutte contre des champignons nuisibles phytopathogènes, **caractérisé en ce qu'**on traite par une quantité synergiquement efficace de la substance active 1) et de la substance active 2c) selon la revendication 1 les champignons, leur habitat ou les plantes, le sol ou des semences à protéger contre l'attaque par des champignons.

5. Procédé selon la revendication 4, **caractérisé en ce qu'**on applique simultanément ensemble, simultanément séparément, ou successivement les substances actives 1) et 2c) selon la revendication 1.

6. Procédé selon la revendication 4 ou 5, **caractérisé en ce qu'**on l'utilise dans des cultures de soja, de riz ou de céréales.

7. Procédé selon la revendication 4 ou 5, **caractérisé en ce qu'**on l'utilise dans des cultures viticoles, fruitières ou maraîchères.

8. Procédé selon la revendication 4 ou 5, **caractérisé en ce qu'**on l'utilise sur des cucurbitacées, concombres, haricots, fruitiers à noyaux, fraisiers ou cerisiers.

9. Procédé selon l'une quelconque des revendications 4 à 8, **caractérisé en ce qu'**on utilise les substances actives 1) et 2c) selon la revendication 1 ou la composition selon l'une quelconque des revendications 1 et 2 en une quantité

de 5 g/ha à 2 000 g/ha.

**10.** Procédé selon l'une quelconque des revendications 4 à 8, **caractérisé en ce qu'**on utilise les substances actives 1) et 2c) selon la revendication 1 ou la composition selon l'une quelconque des revendications 1 et 2 en une quantité de 1 à 1 000 g/100 kg de semences.

**11.** Semence, contenant une composition selon l'une quelconque des revendications 1 et 2 en une quantité de 1 à 1 000 g/100 kg.

**12.** Utilisation des substances actives 1) et 2c) selon la revendication 1, pour la préparation d'un produit selon la revendication 3.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0897904 A1
- GB 2098607 A
- EP 1023834 A1
- WO 02067679 A
- EP 257993 A
- US 5013659 A
- US 6222100 B
- WO 0182685 A
- WO 0026390 A
- WO 9741218 A
- WO 9802526 A
- WO 9802527 A
- WO 04106529 A
- WO 0520673 A
- WO 0314357 A
- WO 0313225 A
- WO 0314356 A
- WO 0416073 A
- WO 9200377 A
- EP 242236 A
- EP 242246 A
- US 5559024 A
- WO 2002015701 A
- EP 374753 A
- WO 9307278 A
- WO 9534656 A
- EP 427529 A
- EP 451878 A
- WO 0318810 A
- WO 0352073 A
- WO 03018810 A
- EP 0392225 A
- EP 141317 A
- EP 226917 A
- EP 1028125 A
- EP 1035122 A
- EP 1201648 A
- WO 9846608 A
- WO 9924413 A
- WO 0314103 A
- WO 0353145 A
- WO 0366609 A
- WO 0449804 A
- WO 0587772 A
- WO 0587773 A
- WO 06087325 A
- EP 152031 A
- EP 243970 A
- EP 256503 A
- EP 428941 A
- EP 532022 A
- EP 1122244 A
- JP 2002316902 B
- DE 19650197
- DE 10021412
- DE 102005009458
- US 3296272 A
- US 3325503 A
- WO 9914187 A
- WO 9927783 A
- WO 0029404 A
- WO 0046148 A
- WO 0065913 A
- WO 0154501 A
- WO 0156358 A
- WO 0222583 A
- WO 0240431 A
- WO 0310149 A
- WO 0311853 A
- WO 0316286 A
- WO 0361388 A
- WO 0374491 A
- WO 05120234 A
- WO 05123689 A
- WO 05123690 A
- WO 0563721 A
- WO 0615866 A
- WO 0687343 A
- WO 0782098 A
- WO 0790624 A
- US 3060084 A
- EP 707445 A
- WO 9113546 A
- US 4172714 A
- US 4144050 A
- US 3920442 A
- US 5180587 A
- US 5232701 A
- US 5208030 A
- GB 2095558 A
- US 3299566 A

**In der Beschreibung aufgeführte Nicht-Patentliteratur**


- *Can. J. Plant Sci.,* 1968, vol. 48 (6), 587-94
- **BROWNING.** Agglomeration. *Chemical Engineering,* 04. Dezember 1967, 147-48
- Perry's Chemical Engineer's Handbook. McGraw-Hill, 1963, 8-57
- **KLINGMAN.** Weed Control as a Science. John Wiley & Sons, 1961
- **HANCE et al.** Weed Control Handbook. Blackwell Scientific Publications, 1989
- **MOLLET, H. ; GRUBEMANN, A.** Formulation technology. Wiley VCH Verlag, 2001
- Calculating synergistic and antagonistic responses of herbicide Combinations. **COLBY, S. R.** Weeds. 1967, vol. 15, 20-22